(19) Europäisches Patentamt
European Patent Office
Office européen des brevets

(11) EP 1 445 349 A1

(12) # EUROPEAN PATENT APPLICATION
published in accordance with Art. 158(3) EPC

(43) Date of publication:
**11.08.2004 Bulletin 2004/33**

(21) Application number: **02780090.3**

(22) Date of filing: **14.11.2002**

(51) Int Cl.^7: **C23C 26/00**

(86) International application number:
**PCT/JP2002/011874**

(87) International publication number:
**WO 2003/042427 (22.05.2003 Gazette 2003/21)**

(84) Designated Contracting States:
**AT BE DE ES FR GB IT NL**
Designated Extension States:
**AL LT LV MK RO SI**

(30) Priority: **14.11.2001 JP 2001348598**
**14.11.2001 JP 2001348886**
**08.11.2002 JP 2002325087**
**08.11.2002 JP 2002325088**

(71) Applicant: **JFE Steel Corporation**
**Tokyo, 100-0011 (JP)**

(72) Inventors:
- **UMINO, Shigeru Int'l Prop. Dep.**
**Chiyoda-ku, Tokyo 100-0011 (JP)**
- **OGATA, Hiroyuki Int'l Prop. Dep.**
**Chiyoda-ku, Tokyo 100-0011 (JP)**

(74) Representative: **Grünecker, Kinkeldey,**
**Stockmair & Schwanhäusser Anwaltssozietät**
**Maximilianstrasse 58**
**80538 München (DE)**

(54) **SURFACE−TREATED METAL SHEET AND SURFACE−TREATING AGENT**

(57) A surface treated metal sheet having an organic coating comprising an epoxy resin, a glycoluril resin, and a metal compound (which is not a chromium compound) on at least one surface of the metal sheet; or a surface treated metal sheet having an intermediate layer comprising a metal (which is not chromium) on at least one surface of the metal sheet, and an organic coating comprising an epoxy resin and a glycoluril resin on the intermediate layer. A surface treating agent comprising an epoxy resin, a glycoluril resin, and a metal compound (which is not a chromium compound).

EP 1 445 349 A1

## Description

TECHNICAL FIELD

This invention relates to a surface treated metal sheet, and in particular, a surface treated zinc-coated steel strip. More specifically, this invention relates to a surface treated metal sheet having an organic coating exhibiting excellent corrosion resistance and wet adhesion, and a surface treated metal sheet having an organic coating exhibiting excellent electroconductivity, corrosion resistance, and wet adhesion. This invention also relates to a surface treating agent which is adapted for use in forming such organic coating.

BACKGROUND ART

Zinc and zinc alloy-coated steel sheets such as zinc-coated steel sheets and zinc-aluminum coated steel sheets have been widely used in the field of home appliance, automobiles, and construction. These steel sheets are used after plating and chromate coating treatment or optionally with further formation of an organic coating on the chromate coating to improve the corrosion resistance of the steel sheet. Chromate coating is an extremely thin film of about 0.01 μm, which undergoes the so called "self-repairing", thereby exhibiting outstanding corrosion resistance. The chromate coating also exhibits excellent electroconductivity since it is extremely thin. When the chromate coating is overlaid with an organic coating, it exhibits good adhesion to the overlying organic coating to improve the corrosion resistance of the steel sheet.

Despite such outstanding corrosion resistance, electroconductivity, and adhesion to the overlying layer, it contains hexavalent chromium, and special waste water treatment defined in the Water Pollution Prevention Act is required in the chromate treatment raising the cost. Because of such situation, a variety of non-chromate surface treatment technologies have been investigated and proposed as described below in order to prevent white rust in the steel sheets, in particular, a zinc alloy-coated steel sheet.

(1) A method for treating a metal surface by using a chromium-free composition comprising (a) an anion component (e.g. fluorotitanic acid represented by ($TiF_6^{2-}$)) comprising at least four fluorine atoms and at least one element such as Ti or Zr, (b) a cation such as Co or Mg, (c) a free acid for pH adjustment, and (d) an organic resin (for example, JP 5-195244 A).

(2) A method for treating a metal surface by using a chromium-free composition comprising (a) a hydroxyl group-containing organic resin, (b) a phosphoric acid, and (c) a phosphate of a metal such as Cu or Co (for example, JP 9-241856 A).

(3) A surface treating agent for a metal being a chromium-free composition comprising (a) a resin having a polyhydroxyether segment and a segment of the copolymer of an unsaturated monomer, (b) phosphoric acid, and (c) a phosphate compound of a metal such as Cu or Co (for example, JP 11-50010 A).

(4) A water-soluble surface treating agent produced by dissolving in an aqueous solvent (a) a divalent or higher-valent ion of a metal such as Mn or Co, (b) an acid such as fluoro acid or phosphoric acid, (c) a silane coupling agent, and (d) a water soluble polymer comprising 2 to 50 polymerization units (such as JP 11-106945 A).

(5) A method for applying to a zinc-coated steel sheet a water-borne rust preventive coating agent comprising (a) a thiocarbonyl group-containing compound, (b) phosphate ion, and (c) a water-dispersible silica (for example, JP 11-29724 A).

In the methods (1) to (4) as described above, the resulting products enjoy the corrosion resistance of acceptable level when the metal sheet is coated with a surface treating agent (coating agent) at a sufficient coating weight, namely, when the coating of sufficient thickness is formed on the metal sheet. The corrosion resistance, however, has been extremely insufficient when some parts of the metal sheet such as projections of the metal sheet are left uncovered, or when the coating formed is too thin. In a word, when the coating on the metal sheet suffers coating flaw or damages, since corrosion proceeds from such defects, accordingly the corrosion resistance has been far from being sufficient.

In the meanwhile, a sulfur-containing compound such as the thiocarbonyl group-containing compound of the method (5) is readily adsorbed on the surface of a metal such zinc, and thiol ion also undergoes a synergistic action with phosphate ion in the course of the coating to become adsorbed on the active sites on the zinc surface, thereby exhibiting rust preventive effects. The zinc-coated steel sheets produced by such surface treating method certainly exhibits high corrosion resistance when its surface is covered with the compound having a thiocarbonyl group such as -NCS, or -OCS group. However, when the coating has insufficient thickness, the steel sheet will then have some parts of its surface uncovered by the thiocarbonyl group-containing compound, and rusting will starts from such parts. The corrosion also starts from the sites of coating flaw or damages made in the coating on the metal sheet, and proceeds

from them, accordingly, the corrosion resistance has been insufficient.

Moreover, the conventional technologies of (1) to (5) as described above are all based on the idea of establishing a firm bond at the boundary between the metal surface and the coating formed by the surface treating agent. Such adhesion between the metal surface and the surface treating agent, however, is insufficient when seen microscopically, and this approach has its limit in the adhesion in wet environment (wet adhesion). To be more specific, there has been a problem that, when the coating is damaged, rusting starts from the damaged part in corrosive environment and the corrosion expands from the damaged site.

## DISCLOSURE OF THE INVENTION

The present invention has been completed in view of such situation, and an object of the present invention is to provide various metal sheets having various organic coatings including a zinc-coated steel sheet which has an organic coating exhibiting outstanding corrosion resistance and wet adhesion as well as excellent electroconductivity, wherein the special waste water treatment defined by the Water Pollution Prevention Act is not required in the course of applying the surface treating agent and during use of the thus produced surface treated zinc-coated steel strip, and which has overcome the defects of conventional surface treated zinc-coated steel sheets. Another object of the present invention is to provide a surface treating agent which is well adapted for providing such an organic coating.

Accordingly, the present invention provides a surface treated metal sheet having an organic coating comprising an epoxy resin, a glycoluril resin, and a metal compound (excluding a chromium compound) on at least one surface of the metal sheet.

Also provided by the present invention is a surface treated metal sheet having an intermediate layer comprising a metal (excluding chromium) on at least one surface of the metal sheet, and an organic coating comprising an epoxy resin and a glycoluril resin on the intermediate layer.

Also provided by the present invention is a surface treated metal sheet having an intermediate layer comprising a metal (excluding chromium) on at least one surface of the metal sheet, and an organic coating comprising an epoxy resin, a glycoluril resin, and a metal compound (excluding a chromium compound) on the intermediate layer.

In the surface treated metal sheet of the present invention, the epoxy resin is preferably at least one member selected from the group consisting of a bisphenol epoxy resin, a phosphorylated epoxy resin, and a modified epoxy resin having primary hydroxyl group.

In the surface treated metal sheet of the present invention, the organic coating is preferably an organic coating containing a bisphenol epoxy resin, a phosphorylated epoxy resin, a glycoluril resin, and a metal compound.

In the surface treated metal sheet of the present invention, the organic coating is preferably an organic coating containing a bisphenol epoxy resin, a modified epoxy resin having primary hydroxyl group, a glycoluril resin, and a metal compound.

In the surface treated metal sheet of the present invention, the organic coating is preferably an organic coating containing a phosphorylated epoxy resin, a modified epoxy resin having primary hydroxyl group, a glycoluril resin, and a metal compound.

In the surface treated metal sheet of the present invention, the organic coating is preferably an organic coating containing a bisphenol epoxy resin, a phosphorylated epoxy resin, a modified epoxy resin having primary hydroxyl group, a glycoluril resin, and a metal compound.

In the surface treated metal sheet of the present invention, the metal compound preferably comprises at least one metal selected from the group consisting of Mg, Mn and Al, and the metal compound is at least one metal compound selected from a phosphate, a carbonate, a nitrate, an acetate, a hydroxide, a fluoride, an oxo acid salt, and a borate.

In the surface treated metal sheet of the present invention, the metal compound preferably contains at least one metal selected from the group consisting of Mg, Mn, V and Al, and said metal compound comprises at least one metal compound selected from a phosphate, a carbonate, a nitrate, an acetate, a hydroxide, a fluoride, an oxo acid salt, and a borate.

In the surface treated metal sheet of the present invention, the metal compound preferably contains at least one metal selected from the group consisting of Mg, Mn, V, Al and Zn, and said metal compound comprises at least one metal compound selected from a phosphate, a carbonate, a nitrate, an acetate, a hydroxide, a fluoride, an oxo acid salt, and a borate.

In the surface treated metal sheet of the present invention, the metal compound preferably further comprises a metal compound wherein the metal is at least one member selected from the group consisting of Zn, Co, Ti, Sn, Ni, Fe, Zr, Sr, Y, Cu, Ca, W, Mo, V, Ba, Na, and K, and said metal compound comprises at least one member selected from a phosphate, a carbonate, a nitrate, an acetate, a hydroxide, a fluoride, an oxo acid salt, a borate, vanadate, and molybdate.

In the surface treated metal sheet of the present invention, the metal is preferably at least one metal selected from the group consisting of Cu, W, Ca, Sr,Zr, Nb, Y, Ti, Ni, Na, K, and Zn.

In the surface treated metal sheet of the present invention, the organic coating preferably further comprises a water repellent.

The present invention also provides a surface treating agent comprising an epoxy resin, a glycoluril resin, and a metal compound.

In the surface treating agent of the present invention, the epoxy resin is preferably at least one member selected from the group consisting of a bisphenol epoxy resin, a phosphorylated epoxy resin, and a modified epoxy resin having primary hydroxyl group.

In the surface treating agent of the present invention, the metal compound contains at least one metal selected from the group consisting of Mg, Mn and Al, and the metal compound is preferably at least one metal compound selected from a phosphate, a carbonate, a nitrate, an acetate, a hydroxide, a fluoride, an oxo acid salt, and a borate.

In the surface treating agent of the present invention, the metal compound preferably further comprises a metal compound wherein the metal is at least one member selected from the group consisting of Zn, Co, Ti, Sn, Ni, Fe, Zr, Sr, Y, Cu, Ca, W, Mo, V, Ba, Na, and K, and the metal compound comprises at least one metal compound selected from a phosphate, a carbonate, a nitrate, an acetate, a hydroxide, a fluoride, an oxo acid salt, a borate, vanadate, and molybdate

The surface treating agent of the present invention preferably further comprises a water repellent.

The surface treating agent of the present invention is well adapted for use with a metal sheet.

## BRIEF DESCRIPTION OF THE DRAWINGS

FIG. 1 is a view showing the content of various components by GDS in different layers in the surface treated, zinc-coated steel sheet of the present invention.

## BEST MODE FOR CARRYING OUT THE INVENTION

The metal sheet which is used for the substrate of the surface treated metal sheet of the present invention is not particularly limited, and exemplary metal sheets include electrolytic zinc-coated steel sheet, electrolytic zinc-nickel-coated steel sheet, hot-dip zinc-coated steel sheet, hot-dip galvanized (Zn-5%Al) steel sheet, hot-dip galvannealed (Zn-55%Al) steel sheet, and other zinc-coated steel sheets, hot rolled steel sheet, cold rolled steel sheet, stainless steel sheet, copper- coated steel sheet, aluminum sheet, hot-dip tin-zinc (Sn-10%Zn) coated steel sheet, hot-dip aluminum-coated steel sheet, and terne (Pb-10%Sn) coated steel sheet. The preferred are zinc-coated steel sheets, and the most preferred is the electrolytic zinc-coated steel sheet.

One organic coating of the present invention is an organic coating formed as the outermost layer on the surface of the metal sheet, and this organic coating comprises an epoxy resin, a glycoluril resin, and a metal compound.

The glycoluril resin is represented by the structural formula:

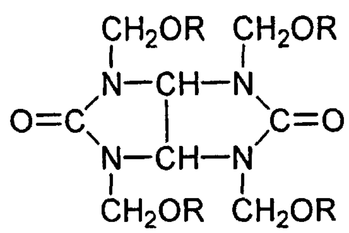

(wherein R is an alkyl group represented by the formula: $C_nH_{2n+1}$, and n is an integer of 0 or 1 to 2).

The other organic coating of the present invention is the organic coating formed as the outermost layer on the intermediate layer, which is either an organic coating comprising an epoxy resin and a glycoluril resin, or an organic coating comprising an epoxy resin, a glycoluril resin, and a metal compound. Such organic coating is a cured organic coating formed from an epoxy resin, a glycoluril resin, and a metal compound, or a cured organic coating comprising an epoxy resin and a glycoluril resin, and the organic coating is firmly adhered to the substrate metal sheet or the intermediate layer formed on the metal sheet as will be described below. The term "cured" used herein includes "fully cured", "semi-cured", and "partially cured".

When no intermediate layer is formed, the organic coating may preferably have a thickness of 0.1 to 5 µm, more preferably 0.5 to 2.0 µm, and most preferably 0.7 to 1.5 µm. When the thickness is more than 5 µm, the organic coating may undergo powdering when it is formed to a high degree while such thickness is effective in improving the corrosion resistance. On the other hand, when the thickness is less than 0.1 µm, the effect of improving the corrosion

resistance declines to be insufficient.

When the intermediate layer is formed, the organic coating may preferably have a thickness of 0.5 to 4.0 μm, and more preferably 1.0 to 3.0 μm. When the thickness is more than 4.0 μm, the organic coating may undergo powdering when it is formed to a high degree while such thickness is effective in improving the corrosion resistance. On the other hand, when the thickness is less than 0.5 μm, the effect of improving the corrosion resistance declines to be insufficient.

The organic coating of the present invention exhibits excellent wet adhesion, and also excellent corrosion resistance. Such properties are realized by the curing of the epoxy resin with the glycoluril resin, and to be more specific, by the flexible structure of the glycoluril resin which adds toughness to the hard and brittle structure of the cured coating. The glycoluril structure of the cured coating also improves adhesion to the underlying intermediate layer, or in some case, to the metal sheet. This enhances the prevention of the intrusion of chlorine ion and other corrosive factors of the environment into the organic coating as well as prevention of intrusion of corrosive factors by the capillary action at the boundary between the organic coating or the intermediate layer and the metal sheet. The corrosion resistance is thereby improved. The existence of the metal compound further improves the corrosion resistance.

The intermediate layer of the present invention is a thin layer exhibiting corrosion resistance and electroconductivity which is a lower layer or an underlying layer of the organic coating. This layer is firmly bonded to the metal sheet, and this layer is formed either by applying to the metal sheet a surface treating agent containing a metal compound with an epoxy resin and a glycoluril resin, or by first applying an aqueous solution containing a metal compound and then applying a surface treating agent containing an epoxy resin and a glycoluril resin. The intermediate layer comprises a metal which is the main component, and optionally, a resin component such as an epoxy resin or a glycoluril resin.

The existence of the intermediate layer was confirmed, for example, by GDS (glow discharge spectroscopy) using a sample comprising the steel sheet and the coating, which has been prepared by applying a surface treating agent or a solution containing a metal compound on a zinc-coated steel sheet. The measurement was carried out by using RF-GDS3860 (anode diameter, 4 mm; power, 20 W; Ar gas flow rate, 300 cc/min) manufactured by Rigaku Co., Ltd. The result of the measurements are shown in FIG. 1 wherein glow intensity (V) (the vertical axis) is indicated in relation to the sputtering time (horizontal axis). In FIG. 1, the sputtering time of 0 second corresponds to the outermost surface of the coating in the sample, and as the time proceeds, interior of the intermediate layer is indicated. Distribution of various elements in the coating indicated existence of three layers, namely, the layer with high C and N contents and low metal content, the layer with high contents of P as well as metals such as Zn and Mn, the layer with a high Zn content and a low C content. These three layers were designated from the layer nearest to the outer surface of the zinc-coated steel sheet "an organic coating", "an intermediate layer" and "a coated layer". Thickness of the intermediate layer can be determined from FIG. 1 on the bases of the sputtering speed calculated in terms of iron.

The intermediate layer may have different thickness depending on the conditions of the application of the surface treating agent, the type of metals included in the surface treating agent, and the like. The thickness is typically 50 to 500 nm, and preferably 100 to 200 nm. When the thickness is within the range of 50 to 500 nm, the effect of coating the metal sheet is exerted and improvement in the corrosion resistance is confirmed. A thickness of more than 500 nm is not advantageous from the economic point of view.

The curing of the epoxy resin by the glycoluril resin is estimated to proceed by the mechanism as described below.

When the surface treating agent is baked at a temperature in the vicinity of 150 to 240°C, it is estimated that the hydroxyl group formed in the course of polymerization by mutual addition of the epoxy group and the hydroxyl group that had been included in the at least one epoxy resin selected from the group consisting of (a) a bisphenol epoxy resin, (b) a phosphorylated epoxy resin, and (c) a modified epoxy resin having primary hydroxyl group [in the case of the phosphorylated epoxy resin (b), the hydroxyl group being the hydroxyl group bonded to phosphorus atom] and the hydroxyl group that had been included in the epoxy resin undergoes condensation by dehydration (dealcoholation) with the hydroxyl group (methylol group, alkylmethylol group, and the like) of the glycoluril resin, and the epoxy resin is thereby cured. The glycoluril structure and the structure of the hydroxyl group in the cured epoxy resin then contributes for the firm wet adhesion of the coating with the metal sheet base, resulting in the outstanding corrosion resistance.

The action and effect of corrosion resistance realized by the presence of the metal compound is not known for detail. However, the mechanism is estimated for the case of the zinc-coated steel sheet as described below. The coated surface is normally oxidized to become covered with oxides with lapse of time, and the oxidized surface exhibits insufficient wettability by the surface treating agent and the organic coating formed after insufficient wetting suffers from insufficient adhesions. When a metal compound is added to the surface treating agent, the metal compound precipitates on the coated surface to become firmly attached to the surface, and the organic coating will cover the surface of the precipitated metal compound before oxidization of the metal compound takes places. The coated layer will then have a structure similar to the state in which an inorganic layer which is not an oxide is formed between the coated surface and the organic coating, and the improved wet adhesion is estimated to have been realized by such

structure. The metal compound used in the present invention is also believed to have the effect of stabilizing and compacting the corrosion product of the zinc in the coated layer, and the corrosion resistance is estimated to last for a longer period by such effect.

To be more specific, $Zn^{2+}$ and $OH^-$ dissolve in a salt spray environment from the zinc-coated layer underneath the organic coating, in particular, from the damaged area of the organic coating by the anode reaction (1) and the cathode reaction (2) as described below, and electroconductive ZnO is formed by the reaction (3) forming the corrosion product ($Zn(OH)_2$) and the dehydration reaction (4) as described below. The corrosion proceeds as a result of such reaction. When a metal ion $Me^{n+}$ is present at the damaged area (corroded area) of the coating in such reaction, a stable corrosion product comprising Me and Zn is formed by the reaction (5), below, to thereby realize the corrosion resistance.

$$Zn \rightarrow Zn^{2+} + 2\ e^{-1} \quad (1)$$

$$H_2O + 1/2\ O_2 + 2\ e^- \rightarrow 2\ OH^- \quad (2)$$

$$Zn^{2+} + 2\ OH^- \rightarrow Zn(OH)_2 \quad (3)$$

$$Zn(OH)_2 \rightarrow ZnO + H_2O \quad (4)$$

$$Me^{n+} + Zn^{2+} + x\ OH^- \rightarrow (Me, Zn)\ (OH)_x \quad (5)$$

The action and effect that the metal included in the intermediate layer of the present invention affects on the corrosion resistance is not clear. The mechanism, however, is estimated as described below.

Of the components included in the surface treating agent, it has been estimated that free metal ions which will constitute the intermediate layer first form a firm bond with the metal ion of the metal sheet through an ionic bond prior to the epoxy resin and the glycoluril resin which are the component that will constitute the organic coating, and this firm bond contributes for the improvement in the corrosion resistance. Since the presence of the intermediate layer also enables formation of a thinner organic coating, the metal sheet will ensure an improved electroconductivity in addition to the improvement in the corrosion resistance

The epoxy resin used in the present invention is preferably at least one member selected from the group consisting of (a) a bisphenol epoxy resin, (b) a phosphorylated epoxy resin, and (c) a modified epoxy resin having primary hydroxyl group.

The bisphenol epoxy resin (a) is preferably a bisphenol epoxy resin having an epoxy equivalent of 500 to 5000, and more preferably 900 to 4000. When the epoxy equivalent is less than 500, reaction rate with the glycoluril resin will be insufficient, thus the desired cured coating may be failing to produce, and the corrosion resistance may be insufficient. On the contrary, when the epoxy equivalent is in excess of 5000, the epoxy group will suffer from insufficient reactivity, thus the desired cured coating may be failing to produce, and the corrosion resistance may be insufficient.

The phosphorylated epoxy resin (b) is preferably the one produced by reacting a bisphenol epoxy resin having an epoxy equivalent of up to 500 with a phosphoric acid compound. When the epoxy equivalent is in excess of 500, the content of P-OH group in the resulting phosphorylated epoxy resin (b) will be insufficient, the desired cured coating may be failing to produce.

The phosphoric acid compound is a phosphoric acid compound having at least two hydroxyl groups bonded to the phosphorus atom, and it is the generic term for the acid obtained by hydrating diphosphorus pentaoxide. Exemplary phosphoric acid compounds include metaphosphoric acid, pyrophosphoric acid, orthophosphoric acid, triphosphoric acid, and tetraphosphoric acid, and the preferred is orthophosphoric acid. Also acceptable for use are phosphate monoesters such as monomethyl phosphate, monooctyl phosphate, and monophenyl phosphate.

Use of the phosphorylated epoxy resin (b) is preferable since it forms a more stable aqueous resin composition by neutralizing with an amine compound. Exemplary amine compounds include ammonia, alkanolamines such as diethanolamine and triethanolamine, alkyl amines such as diethylamine and triethylamine, and alkylalkanolamines such as dimethylethanolamine.

The phosphorylated epoxy resin (b) may preferably have a phosphate equivalent of 150 to 1000, and preferably 300 to 800. The phosphate equivalent is a value obtained by dividing the average molecular weight by the number of phosphate groups per 1 molecule. When the phosphate equivalent is in the range of 150 to 1000, the resin will undergo sufficient curing, and the effect of the phosphate group is fully realized.

The modified epoxy resin having primary hydroxyl group (c) is preferably an epoxy polyol resin produced by reacting a bisphenol epoxy resin having an epoxy equivalent of 500 to 5000, and more preferably, 900 to 4000 with a primary amine, a secondary amine, 2,2-dimethylol propionic acid, 2,2-dimethylol butanoic acid, carboxylate compound, or the like.

The modified epoxy resin having primary hydroxyl group (c) may preferably have an epoxy equivalent of 550 to 40000, and more preferably 600 to 25000. When the epoxy equivalent is in the range of 550 to 40000, amount of the primary hydroxyl group required for the reaction with the glycoluril resin will be reserved.

The bisphenol epoxy resin may be a bisphenol F epoxy resin, a bisphenol A epoxy resin, or the like, or a such bisphenol resin having its secondary hydroxyl group crosslinked by a polyisocyanate or the like.

The primary amine or the secondary amine used in producing the modified epoxy resin having primary hydroxyl group (c) include alkanolamines such as monoethanolamine, methylethanolamine, butylethanolamine, diethanolamine, diisopropanolamine, and dimethylaminopropylethanolamine, and dibutylamine, dioctylamine and other dialkylamines. An epoxypolyol resin having primary hydroxyl group produced by using diethanolamine or the like is particularly preferable since it has curability even at a low temperature.

Equivalent ratio of the primary amine, secondary amine, 2,2-dimethylol propionic acid, 2,2-dimethylol butanoic acid, carboxylate compound, and the like in relation to the bisphenol epoxy resin is determined so that the resulting modified epoxy resin having primary hydroxyl group (c) will have an epoxy equivalent preferably at the level of 600 to 25000. The equivalent ratio, however, is typically such that 0.1 to 0.9 equivalent, and preferably 0.2 to 0.8 equivalent is used per 1 equivalent of epoxy group.

In the present invention, use of the phosphorylated epoxy resin (b) is preferable since the phosphorylated epoxy resin (b) has a hydroxyl group bonded to phosphorus atom, and this hydroxyl group reacts with the epoxy group to promote the polymerization of the epoxy resin and the polymerized epoxy resin is cured by the glycoluril resin, thereby realizing the excellent corrosion resistance. Even more preferred is use of the phosphorylated epoxy resin (b) and the bisphenol epoxy resin (a), or the phosphorylated epoxy resin (b) and the modified epoxy resin having primary hydroxyl group (c).

When the organic coating contains the modified epoxy resin having primary hydroxyl group (c), dehydration (dealcoholation) with the glycoluril resin occurs at a lower temperature after the polymerization with the bisphenol epoxy resin (a) and/or the phosphorylated epoxy resin (b) has taken place. Accordingly, when a low temperature baking is employed for the curing, use of the modified epoxy resin having primary hydroxyl group (c) is advantageous.

Use of the epoxy resin having primary hydroxyl group (c) is also preferable since incorporation of the epoxy resin having primary hydroxyl group (c) in the organic coating of the present invention realizes improved compactness and air blockage of the organic coating which results in the improved corrosion resistance.

The glycoluril resin used in the present invention may be a derivative wherein methylol, butylol, or the like has added to all or a part of the amino groups at 1-,3-,4-,6- of the glycoluril; an alkyletherified derivative which has been methylated, methylated / ethylated, or butylated; an oligomer wherein glycoluril has condensed via methylol or the like; and alkyl derivatives thereof. The preferred are tetra-methylolated glycoluril and its oligomers.

The metal compound which constitutes the organic coating of the present invention is preferably a compound of at least one metal selected from the group consisting of Mg, Mn, and Al, which is preferably used with a compound of at least one metal selected from the group consisting of Zn, Co, Ti, Sn, Ni, Fe, Zr, Sr, Y, Cu, Ca, W, Mo, V, Ba, Na, Nb and K. The most preferred is use of two or more of the metal compounds of Mg, Mn, and Al, optionally further in combination with other metal compound, and in particular, with a Zn compound.

The metal compound of Mg, Mn, and Al as described above is preferably at least one metal compound selected from phosphate, carbonate, nitrate, acetate, hydroxide, fluoride, oxo acid salt, and borate. More preferably, the metal compound is at least one member selected from the group consisting of phosphate, nitrate, acetate, oxo acid salt, and borate. The compound of other metal as described above is preferably least one metal compound selected from the group consisting of phosphate, carbonate, nitrate, acetate, hydroxide, fluoride, oxo acid salt, borate, vanadate, and molybdate, and more preferably, at least one metal compound selected from the group consisting of phosphate, nitrate, acetate, oxo acid salt, and borate.

The metal compound is included at a proportion in term of mass and in relation to the total solid content of the coating of 2 / 98 to 40 / 60. When the proportion of the metal compound is at 2 / 98 to 40 / 60, the effect of corrosion resistance is confirmed. Preferably, the proportion is 5 / 95 to 50 / 50, and most preferably, the proportion is 10 / 90 to 20 / 80.

Mass ratio of the compounds is not limited when two or more metal compounds are used together. However, when metal compounds of Mg, Mn, and Al are used together, for example, they may be used at a mass ratio of Mg / Mn / Al of 1 / 1 / 1 to 5 / 5 / 1.

The metal included in the intermediate layer of the present invention is preferably the one from the metal compound as described above. Such metal is preferably a metal such as Mg, Mn, V, or Al, or a mixture thereof, which is used with a metal other than the Mg, Mn, V, or Al, and in particular, at least one metal selected from the group consisting of Cu, W, Ca, Sr, Zr, Nb, Y, Ti, Ni, Na, K, and Zn. Use of a combination of a metals which is Mg, Mn, V, or Al with the metal Zn is particularly preferable.

The compositional ratio of epoxy resin / glycoluril resin calculated in mass in the resin of the organic coating of the present invention is 50 / 50 to 95 / 5, and preferably 60 / 40 to 90 / 10. The coating will exhibit corrosion resistance when the ratio is 50 / 50 to 95 / 5.

When the bisphenol epoxy resin (a) and the phosphorylated epoxy resin (b) are used together, the ratio (b) / (a) is 10 / 90 to 50 / 50, and preferably 15 / 85 to 40 / 60. When the ratio is 10 / 90 to 50 / 50 the organic coating will exhibit sufficient adhesion to the underlying metal sheet to ensure the corrosion resistance.

When the bisphenol epoxy resin (a) and the modified epoxy resin having primary hydroxyl group (c) are used together, the ratio (a) / (c) is 5 / 95 to 30 / 70, and preferably 10 / 90 to 20 / 80. When the ratio is 5 / 95 to 30 / 70, the curing and dehydration (dealcoholation) by the glycoluril resin will proceed to an adequate degree, and the resulting coating will ensure sufficient corrosion resistance.

When the phosphorylated epoxy resin (b) and the modified epoxy resin having primary hydroxyl group (c) are used together, the ratio (b) / (c) is 5 / 95 to 40 / 60, and preferably 7 / 93 to 20 / 80. When the ratio is 5 / 95 to 40 / 60, the resulting coating will ensure sufficient corrosion resistance.

When the bisphenol epoxy resin (a), the phosphorylated epoxy resin (b), and the modified epoxy resin having primary hydroxyl group (c) are used together, the ratio (a) / (b) / (c) is 10 / 10 / 80 to 10 / 40 / 50, and preferably 10 / 20 / 70 to 10 / 30 / 60. When the ratio is 10 / 10 / 80 to 10 / 40 / 50, the resulting coating will ensure sufficient corrosion resistance.

In the present invention, since the organic coating itself may contain a metal compound, or alternatively, the organic coating may be disposed on the metal-containing intermediate layer, the organic coating is excellent in corrosion resistance. In order to further improve the corrosion resistance, the organic coating may further comprise a urethane resin which enables formation of a tough coating. When the coating contains a urethane resin, intrusion of the corrosive factors into the organic coating is effectively prevented, thereby improving the corrosion resistance. Adhesion to the organic coating is also improved.

Preferably, the urethane resin is a self-emulsifying anionic urethane resin having ether skeleton or ether-ester skeleton. The urethane resin is preferably used at an amount of 5 to 20% by mass of the solid content of the surface treating agent.

The organic coating of the present invention preferably further comprises a water repellent. Since the water repellent is hydrophobic, it tends to concentrate near the surface of the organic coating, and as a consequence, prevents intrusion of the corrosive factors to the interior of the organic coating at the surface, thereby improving the corrosion resistance. The water repellent also improves the wet adhesion.

Exemplary water repellents include a fluororesin, a polyethylene wax, and a resin coated with polyethylene wax. The water repellent is preferably used at a content of 5 to 20% by mass of the solid content of the surface treating agent

The organic coating of the present invention may further comprise various additives which impart or improve various properties of the organic coating when added thereto. An exemplary such additive is a silane coupling agent.

The organic coating of the present invention is formed by preparing a surface treating agent containing various components to be included in the organic coating, applying the surface treating agent to the metal sheet, and curing the coating. The surface treating agent is an aqueous solution or an aqueous dispersion prepared by adding an epoxy resin, a glycoluril resin, a metal compound, and a water repellent optionally with a urethane resin to an aqueous solvent, stirring the mixture, and if desired by further heating or by adding a nonionic emulsifier for making the solution aqueous. The surface treating agent may have a concentration in terms of the solid content which results in the stability of the organic resin, and the concentration in terms of solid content is approximately 5 to 35% by mass.

The concentration of the surface treating agent may be the range of the solid content allowing dissolution of the metal compound or stability of the resin, and the concentration in terms of the solid content is approximately 5 to 35% by mass. The metal compound may preferably constitute 5 to 60% by mass of the solid content. When two or more metal compounds are used together, each compound is preferably used at a content of 1 to 50% by mass. When the metal compound is used at 5 to 60% by mass, the resulting product will ensure sufficient corrosion resistance and weldability.

The organic coating of the present invention may be formed by bringing the surface treating agent in contact with the surface of the metal sheet by roll coating, spray coating, brush coating, dip coating, curtain flow, or the like, pressing the coating with a wringer roll, drying, and baking, whereby the aqueous solvent is volatilized and the epoxy resin is cured. The surface of the metal sheet may be pretreated before the forming of the organic coating, for example, by chemical conversion such as phosphate treatment.

The coating weight or the amount deposited may be adjusted so that the organic coating would be deposited to the thickness within the range as described above. The overall thickness of the coatings is preferably in the range of 0.1 to 5 μm when a chemical conversion layer is provided.

The baking is carried out, when only the bisphenol epoxy resin (a) and / or the phosphorylated epoxy resin (b) is used for the epoxy resin, at a relatively high temperature in the range of approximately 200 to 240°C. On the other hand, when the modified epoxy resin having primary hydroxyl group (c) is used as the epoxy resin or with other epoxy resin, the baking is carried out at a relatively low temperature in the range of approximately 150 to 200°C. The baking temperature below the lower limit of such range may result in the insufficient hardening of the organic coating, or in the remaining of the solvent in the organic coating, and the corrosion resistance may be rather insufficient. The baking temperature beyond the upper limit of such range is unlikely to cause any significant problem. Use of such temperature, however, may result in the yellowing of the organic coating due to partial decomposition of the component in the organic coating.

Next, the present invention is described in further detail by referring to the examples.

[Examples 1 to 90 and Comparative Examples 1 to 4: steel sheets with no intermediate layer]

The epoxy resins (a) to (c), the glycoluril resins A to D, the benzoguanamine resin E to F and the melamine resin G to H (these two resin being referred to as the amino resin), the urethane resin A to G, 26 species of the metal compounds, and the water repellents A to D as described below were added to water at the proportion (in relation to 100 parts by mass of the total solid content) shown in Tables 1 to 8, and the mixture was stirred at room temperature to prepare water surface treating agents. The resulting surface treating agent was roll coated on the metal sheets A to N as described below. The temperature was elevated so that the temperature of the metal sheet reached 160°C, 180°C, and 220°C in 20 seconds to form an organic coating having a thickness of 0.3 to 5 μm. Test specimens thereby produced had the organic coating having the properties as shown in Tables 9 to 12.

Metal sheets A to N:

Sheet A: electrolytic zinc-coated steel sheet (sheet thickness: 1.0 mm, Zn: 20 g / $m^2$)
Sheet B: electrolytic zinc-nickel-coated steel sheet (sheet thickness: 1.0 mm, Zn+Ni: 20 g / $m^2$, Ni: 12% by mass)
Sheet C: hot dip zinc-coated steel sheet (sheet thickness: 1.0 mm, Zn: 60 g / $m^2$)
Sheet D: alloyed hot-dip zinc-coated steel sheet (sheet thickness: 1.0 mm, Zn: 60 g / $m^2$, Fe: 10% by mass)
Sheet E: zinc-5% aluminum-coated steel sheet (sheet thickness: 1.0 mm, 60 g / $m^2$, Al: 5% by mass)
Sheet F: zinc-55% aluminum-coated steel sheet (sheet thickness: 1.0 mm, 60 g / $m^2$, Al: 55% by mass)
Sheet G: hot rolled steel sheet (sheet thickness: 1.2 mm)
Sheet H: cold rolled steel sheet (sheet thickness: 1.0 mm)
Sheet I: stainless steel sheet SUS430 (sheet thickness: 1.0 mm)
Sheet J: copper-coated steel sheet (sheet thickness: 1.0 mm, Cu: 30 g / $m^2$)
Sheet K: aluminum sheet JIS 5052 (Al-Mg alloy) (sheet thickness: 1.0 mm)
Sheet L: hot-dip tin-zinc-coated steel sheet (sheet thickness: 1.0 mm, Sn: 60 g / $m^2$, Zn: 10% by mass)
Sheet M: hot-dip zinc-coated steel sheet (sheet thickness: 1.0 mm, Al: 50 g / $m^2$)
Sheet N: terne-coated steel sheet (sheet thickness: 1.0 mm, Pb: 40 g / $m^2$, Sn: 10% by mass)

Epoxy resins (a) to (c):

(a) Bisphenol epoxy resin was produced by the procedure as described below.

To 132 g of propyleneglycol monomethylether was added 680 g of a bisphenol A epoxy resin (a) having an epoxy equivalent 1950, and then 84 g of a nonionic emulsifier ("ADEKA PLURONIC F68") to prepare a uniform solution, and 649 g of water was gradually added to the solution. An emulsion of epoxy resin having an epoxy equivalent of 4000 and a solid content concentration of 50% by mass was obtained by using a triaxial mixer.

(b) Phosphorylated epoxy resin was produced by the procedure as described below.

(b1) Amine neutralization product of phosphorylated epoxy resin (anionic emulsion)

A mixture of 85 g of orthophosphoric acid and 140 g of propyleneglycol monomethylether was prepared, and

425 g of bisphenol A epoxy resin having an epoxy equivalent of 250 was gradually added to this mixture and the reaction was allowed to proceed at 80°C for 2 hours. After the completion of the reaction, 150 g of aqueous solution of 29% by mass of ammonia was gradually added at a temperature of not more than 50°C, and 1150 g of water was further added to obtain an amine neutralization product of phosphorylated epoxy resin having an acid value of 35 and a solid content concentration of 25% by mass.

(b2) Nonionic emulsion of phosphorylated epoxy resin

A mixture of 95 g of orthophosphoric acid and 198 g of propyleneglycol monomethylether was prepared, and 396 g of bisphenol A epoxy resin having an epoxy equivalent of 250 was gradually added to this mixture and the reaction was allowed to proceed at 80°C for 2 hours. After the completion of the reaction, 25 g of nonionic emulsifier ("ADEKA PLURONIC F68") was gradually added at a temperature of not more than 80°C, and when the reaction product became uniform, 264 g of water was added to obtain a phosphorylated epoxy resin having an acid value of 65 and a solid content concentration of 50% by mass.

(b3) Amine neutralization product of phosphorylated epoxy resin (anionic emulsion)

A mixture of 85 g of orthophosphoric acid and 140 g of propyleneglycol monomethylether was prepared, and 807 g of bisphenol A epoxy resin having an epoxy equivalent of 475 was added to this mixture and the reaction was allowed to proceed at 80°C for 2 hours. After the completion of the reaction, 150 g of aqueous solution of 29% by mass of ammonia was gradually added at a temperature of not more than 50°C, and 2386 g of water was further added to obtain an amine neutralization product of phosphorylated epoxy resin having an acid value of 21 and a solid content concentration of 25% by mass(anionic emulsion).

(c) Modified epoxy resin having primary hydroxyl group was produced by the procedure as described below.

(c1) In 876 g of propyleneglycol monomethylether was dissolved 1950 g of bisphenol epoxy resin having an epoxy equivalent of 1950, and 78.8 g of diethanolamine was added to the solution. The reaction was allowed to proceed at 100°C for 3 hours to obtain an emulsion of a modified epoxy resin having an epoxy equivalent of 11600.

Next, 256 g of nonionic emulsifier ("ADEKA PLURONIC F68") was added, and when the reaction product became uniform, 2553 g of water was gradually added to the mixture. An emulsion of modified epoxy resin having primary hydroxyl group with an epoxy equivalent of 22500 and a solid content of 40% by weight was obtained by using a triaxial mixer.

(c2) To 876 g of propyleneglycol monomethylether was dissolved 1950 g of bisphenol epoxy resin having an epoxy equivalent of 1950, and then, 100 g of 2,2-dimethylol propionic acid, and when the reaction product became uniform, 1 g of dimethylbenzylamine was added as a catalyst. After allowing the reaction to take place at 130°C for 3 hours, epoxy equivalent was confirmed to be 12000. Next, 513 g of nonionic emulsifier ("ADEKA PLURONIC F68") was added, and when the reaction product became uniform, 2296 g of water was gradually added to obtain an emulsion of modified epoxy resin having primary hydroxyl group with an epoxy equivalent of 22300 and a solid content concentration of 40% by mass.

(c3) In 380 g of propyleneglycol monomethylether was dissolved 950 g of bisphenol epoxy resin having an epoxy equivalent of 950, and 79 g of diethanolamine was added to the solution. The reaction was allowed to proceed at 100°C for 3 hours to obtain an emulsion of an epoxypolyol resin having an epoxy equivalent of 5640. Next, 127 g of nonionic emulsifier ("ADEKA PLURONIC F68") was added, and when the reaction product became uniform, 1354 g of water was gradually added to the mixture. An emulsion of modified epoxy resin having primary hydroxyl group with an epoxy equivalent of 11500 and a solid content of 40% by weight was obtained by using a triaxial mixer.

Glycoluril resin:

Resin A: "Cymel 1170" (fully butylated glycoluril resin manufactured by Mitsui-Cytec Ltd.)
Resin B: "Cymel 1171" (alkylated (methylated and ethylated) glycoluril resin manufactured by Mitsui-Cytec Ltd.)
Resin C: "Cymel 1172" (tetramethylolated glycoluril resin manufactured by Mitsui-Cytec Ltd.)
Resin D: "Cymel 1174" (fully methylated glycoluril resin manufactured by Mitsui-Cytec Ltd.)
Amino resin
Resin E: "Cymel 1123" (alkylated (methylated and ethylated) benzoguanamine resin manufactured by Mitsui-Cytec Ltd.)

Resin F: "Cymel 106" (fully methylated benzoguanamine resin manufactured by Mitsui-Cytec Ltd.)
Resin G: "Cymel 303" (fully methylated melamine resin manufactured by Mitsui-Cytec Ltd.)
Resin H: "Cymel 370" (partially methylated melamine resin manufactured by Mitsui-Cytec Ltd.)

Urethane resin:

Urethane A: "Superflex 126" (ester ether urethane, anionic, manufactured by DAI-ICHI KOGYO SEIYAKU CO., LTD.)
Urethane B: "Superflex 110" (ether urethane, anionic, manufactured by DAI-ICHI KOGYO SEIYAKU CO., LTD.)
Urethane C: "Superflex 130" (ether urethane, anionic, manufactured by DAI-ICHI KOGYO SEIYAKU CO., LTD.)
Urethane D: "Superflex 150" (ester ether urethane, anionic, manufactured by DAI-ICHI KOGYO SEIYAKU CO., LTD.)
Urethane E: "Superflex 420" (carbonate urethane, anionic, manufactured by DAI-ICHI KOGYO SEIYAKU CO., LTD.)
Urethane F: "Superflex 700" (aromatic isocyanate urethane, anionic, manufactured by DAI-ICHI KOGYO SEIYAKU CO., LTD.)
Urethane G: "Superflex E4000" (ether urethane, nonionic, manufactured by by DAI-ICHI KOGYO SEIYAKU CO., LTD.)

Metal compound:

Metal compound Mg-P: magnesium phosphate
Metal compound Mg-H: magnesium hydroxide
Metal compound Mg-N: magnesium nitrate
Metal compound Mg-B: magnesium borate
Metal compound Mn-C: manganese carbonate
Metal compound Mn-P: manganese phosphate
Metal compound Al-H: aluminum hydroxide
Metal compound Al-A: aluminum acetate
Metal compound Al-F: aluminum fluoride
Metal compound Zn-N: zinc nitrate
Metal compound Zn-C: zinc carbonate
Metal compound Co-N: cobalt nitrate
Metal compound Ti-N: titanium nitrate
Metal compound Sn-N: tin nitrate
Metal compound Ni-N: nickel nitrate
Metal compound Ni-H: nickel hydroxide
Metal compound Fe-N: iron nitrate
Metal compound Zr-H: zirconium hydroxide
Metal compound Sr-N: strontium nitrate
Metal compound Sr-C: strontium carbonate
Metal compound Y-N: yttrium nitrate
Metal compound Cu-N: copper nitrate
Metal compound Ca-N: calcium nitrate
Metal compound V-N: vanadium nitrate
Metal compound Ba-N: barium nitrate
Metal compound Na-V: sodium vanadate
Metal compound Na-Mo: sodium molybdate
Metal compound K-B: potassium borate

Water repellent:

Water repellent A: "Aflon-XAD 911" (fluoropolymer emulsion manufactured by Asahi Glass Fluoropolymers Co., Ltd.)
Water repellent B: "Aflon-QAD 938" (fluoropolymer emulsion manufactured by Asahi Glass Fluoropolymers Co., Ltd.)
Water repellent C: "Hydrocer 6099" (emulsion of polyethylene coated fluoropolymer manufactured by Shamrock Inc.)
Water repellent D: "HYTEC 9017" (emulsion of polyethylene wax manufactured by Toho Chemical Co., Ltd.)

Each test piece was evaluated for the following properties (flat area corrosion resistance and crosscut adhesion in SST environment, formed area corrosion resistance in CCT environment, electroconductivity after the corrosion test, adhesion to the overlying coating, and fingerprint resistance) by the test procedures as described below.

(Flat area corrosion resistance in SST environment)

Test pieces of 70 mm x 150 mm were produced by shearing, and the edges were sealed. Salt spray test (JIS Z 2371) was conducted to measure the time required for the rust to cover 5% of one surface of the test piece, and this time was evaluated by the following criteria:

◎ : 120 hours or more,

○: 96 hours or more and less than 120 hours,

Δ: 72 hours or more and less than 96 hours, and

×: less than 72 hours.

(Cross cut adhesion in SST environment: wet adhesion)

Formed test piece: Test pieces of 50 mm x 150 mm were produced by shearing, and the test piece was then drawn at 9 mm by Erichsen method with the surface treated side in the concave side of a formed test piece.
Cross cuts were then scribed through the organic coating to the bare metal with a cutter knife in the flat area of the formed test piece. An average peeling width (on one side) of the organic coating at the scratch was measured, and cross hatch tape test in SST environment (the wet adhesion) was evaluated by this value.

◎ : 0 mm,
○: more than 0 mm and not more than 1 mm,
Δ: more than 1 mm and not more than 2 mm, and
×: more than 2 mm.

(Formed area corrosion resistance in CCT environment)

Corrosion resistance of the formed area was evaluated by repeating the CCT (cycle corrosion test) cycles each consisting of 8 hours of SST and 16 hours interval, and counting the number of cycles required for the occurrence of the rust in the each area of the formed test piece.

◎ : 4 cycles or more,
○: 3 cycles,
Δ: 2 cycles, and
×: 1 cycle or less.

(Electroconductivity after the corrosion test)

Surface electric resistance of the flat area after 2 cycles of the CCT test was measured with a surface resistivity meter (manufactured by Mitsubishi Chemical Corporation, "Loresta GP") using an ESP probe.

○: 1 mΩ or less
Δ: more than 1 mΩ and not more than 10 mΩ
×: more than 10 mΩ

(Adhesion to the overlying coating)

According to JIS K 5400, a melamine-alkyd resin ("Orgaselect 120 White" manufactured by NIPPON PAINT CO., LTD.) was coated to a thickness of 20 μm by bar coating, and after baking at 135°C for 15 minutes, cross cuts at an interval of 1 mm were scribed on the test piece through the organic coating to the bare metal with a cutter knife. A "Sellotape" was adhered on the cross cut area, and after peeling the tape, the conditions of the coating adhesion was visually inspected and evaluated by the following criteria:

◎ : residual coating, 100%
○: residual coating, 95% or more and less than 100%,
Δ: residual coating, 85% or more and less than 95%,
×: residual coating, 65% or more and less than 85%,
××: residual coating, less than 65%.

(Fingerprint resistance)

Difference in tone (L value, a value, and b value) before and after the application of white vaseline to the test piece was measured by a spectrophotometer ("SQ2000" manufactured by Nippon Denshoku Industries Co., Ltd.) and the measurement was evaluated by using ΔE defined by the following formula (1) according to the following criteria:

◎ : ΔE is 1 or less
○: ΔE is more than 1 and not more than 2
Δ: ΔE is more than 2 and not more than 3
×: ΔE is more than 3

$$\Delta E=\sqrt{\Delta L^2+\Delta a^2+\Delta b^2} \qquad (1)$$

Table 1

| | | Metal sheet | Organic Coating | | | | | | | | | | | | | | |
|---|---|---|---|---|---|---|---|---|---|---|---|---|---|---|---|---|---|
| | | | Bisphenol epoxy resin (a) | Phosphorylated epoxy resin (b) | | | | Epoxy resin having primary hydroxyl group (C) | | | Emulsifier | Glycoluril resin | | Amino resin | | Urethane resin | |
| | | | Part by mass | Epoxy equivalent | P-OH equivalent | Type of resin b | Part by mass | Epoxy equivalent | Type of resin c | Part by mass | | Type | Part by mass | Type | Part by mass | Type | Part by mass |
| EXAMPLE | 1 | A | 0 | 300 | 500 | b1 | 4 | 2000 | c1 | 58 | Nonionic | C | 9 | - | 0 | C | 11 |
| | 2 | B | 0 | 300 | 500 | b1 | 4 | 2000 | c1 | 58 | Nonionic | C | 9 | - | 0 | C | 11 |
| | 3 | C | 0 | 300 | 500 | b1 | 4 | 2000 | c1 | 58 | Nonionic | C | 9 | - | 0 | C | 11 |
| | 4 | D | 0 | 300 | 500 | b1 | 4 | 2000 | c1 | 58 | Nonionic | C | 9 | - | 0 | C | 11 |
| | 5 | E | 0 | 300 | 500 | b1 | 4 | 2000 | c1 | 58 | Nonionic | C | 9 | - | 0 | C | 11 |
| | 6 | F | 0 | 300 | 500 | b1 | 4 | 2000 | c1 | 58 | Nonionic | C | 9 | - | 0 | C | 11 |
| | 7 | A | 0 | 300 | 500 | b1 | 4 | 2000 | c1 | 58 | Nonionic | C | 9 | - | 0 | C | 11 |
| | 8 | A | 0 | 300 | 500 | b1 | 4 | 2000 | c1 | 58 | Nonionic | C | 9 | - | 0 | C | 11 |
| | 9 | A | 0 | 300 | 500 | b1 | 4 | 2000 | c1 | 58 | Nonionic | C | 9 | - | 0 | C | 11 |
| | 10 | A | 0 | 300 | 500 | b1 | 4 | 2000 | c1 | 58 | Nonionic | C | 9 | - | 0 | C | 11 |
| | 11 | A | 0 | 300 | 500 | b1 | 4 | 2000 | c1 | 58 | Nonionic | C | 9 | - | 0 | C | 11 |
| | 12 | A | 0 | 300 | 500 | b1 | 4 | 2000 | c1 | 58 | Nonionic | C | 9 | - | 0 | C | 11 |
| | 13 | A | 0 | 300 | 500 | b1 | 4 | 2000 | c1 | 58 | Nonionic | C | 9 | - | 0 | C | 11 |
| | 14 | A | 0 | 300 | 500 | b1 | 4 | 2000 | c1 | 58 | Nonionic | C | 9 | - | 0 | C | 11 |
| | 15 | A | 0 | 300 | 500 | b1 | 4 | 2000 | c1 | 58 | Nonionic | C | 9 | - | 0 | C | 11 |
| | 16 | A | 0 | 300 | 500 | b1 | 4 | 2000 | c1 | 58 | Nonionic | C | 9 | - | 0 | C | 11 |
| | 17 | A | 0 | 300 | 500 | b1 | 4 | 2000 | c1 | 58 | Nonionic | C | 9 | - | 0 | C | 11 |
| | 18 | A | 0 | 300 | 500 | b1 | 4 | 2000 | c1 | 58 | Nonionic | C | 9 | - | 0 | C | 11 |
| | 19 | A | 0 | 300 | 500 | b1 | 4 | 2000 | c1 | 58 | Nonionic | C | 9 | - | 0 | C | 11 |
| | 20 | A | 0 | 300 | 500 | b1 | 4 | 2000 | c1 | 58 | Nonionic | C | 9 | - | 0 | C | 11 |
| | 21 | A | 0 | 300 | 500 | b1 | 4 | 2000 | c1 | 58 | Nonionic | C | 9 | - | 0 | C | 11 |
| | 22 | A | 0 | 300 | 500 | b1 | 4 | 2000 | c1 | 58 | Nonionic | C | 9 | - | 0 | C | 11 |
| | 23 | A | 0 | 300 | 500 | b1 | 4 | 2000 | c1 | 58 | Nonionic | C | 9 | - | 0 | C | 11 |
| | 24 | A | 10 | 300 | 500 | b1 | 4 | 2000 | c1 | 48 | Nonionic | C | 9 | - | 0 | C | 11 |
| | 25 | A | 30 | 300 | 500 | b1 | 4 | 2000 | c1 | 28 | Nonionic | C | 9 | - | 0 | C | 11 |

Table 2

| | | Organic Coating | | | | | | | | | | | | | | | Temp. after 20 sec in furnace °C |
|---|---|---|---|---|---|---|---|---|---|---|---|---|---|---|---|---|---|
| | | Metal compound | | | | | | | | | | | | Water repellent | | Film thick-ness, μm | |
| | | Mg compound | | Mn compound | | Al compound | | Zn compound | | Other metal compounds | | | | | | | |
| | | Type | part by mass | Type | part by mass | Type | part by mass | Type | part by mass | Type | part by mass | Type | part by mass | Type | part by mass | | |
| EXAMPLE | 1 | Mg-P | 2.5 | Mn-C | 2.5 | Al-H | 2.5 | Zn-N | 2.5 | - | 0 | - | 0 | C | 8 | 1 | 180 |
| | 2 | Mg-P | 2.5 | Mn-C | 2.5 | Al-H | 2.5 | Zn-N | 2.5 | - | 0 | - | 0 | C | 8 | 1 | |
| | 3 | Mg-P | 2.5 | Mn-C | 2.5 | Al-H | 2.5 | Zn-N | 2.5 | - | 0 | - | 0 | C | 8 | 1 | |
| | 4 | Mg-P | 2.5 | Mn-C | 2.5 | Al-H | 2.5 | Zn-N | 2.5 | - | 0 | - | 0 | C | 8 | 1 | |
| | 5 | Mg-P | 2.5 | Mn-C | 2.5 | Al-H | 2.5 | Zn-N | 2.5 | - | 0 | - | 0 | C | 8 | 1 | |
| | 6 | Mg-P | 2.5 | Mn-C | 2.5 | Al-H | 2.5 | Zn-N | 2.5 | - | 0 | - | 0 | C | 8 | 1 | |
| | 7 | Mg-P | 2.5 | Mn-P | 2.5 | Al-H | 2.5 | - | 0 | Sn-N | 2.5 | - | 0 | C | 8 | 1 | |
| | 8 | Mg-P | 2.5 | Mn-P | 2.5 | Al-H | 2.5 | - | 0 | Ni-N | 1.5 | Sr-N | 1.0 | C | 8 | 1 | |
| | 9 | Mg-P | 2.5 | Mn-C | 2.5 | Al-H | 2.5 | - | 0 | Fe-N | 1.5 | - | 0 | C | 8 | 1 | |
| | 10 | Mg-P | 2.5 | Mn-P | 2.5 | Al-H | 2.5 | - | 0 | Y-N | 1.5 | - | 0 | C | 8 | 1 | |
| | 11 | Mg-H | 2.5 | Mn-P | 2.5 | Al-H | 2.5 | - | 0 | Cu-N | 1.5 | - | 0 | C | 8 | 1 | |
| | 12 | Mg-P | 2.5 | Mn-P | 2.5 | Al-H | 2.5 | - | 0 | Ca-N | 1.5 | - | 0 | C | 8 | 1 | |
| | 13 | Mg-P | 2.5 | Mn-P | 2.5 | Al-H | 2.5 | - | 0 | V-N | 1.5 | - | 0 | C | 8 | 1 | |
| | 14 | Mg-H | 2.5 | Mn-P | 2.5 | Al-H | 2.5 | - | 0 | Ba-N | 1.5 | - | 0 | C | 8 | 1 | |
| | 15 | Mg-P | 2.5 | - | 0 | Al-A | 2.5 | Zn-C | 5.0 | - | 0 | - | 0 | C | 8 | 1 | |
| | 16 | Mg-P | 2.5 | Mn-P | 2.5 | - | 0 | Zn-C | 5.0 | - | 0 | - | 0 | C | 8 | 1 | |
| | 17 | Mg-P | 2.5 | Mn-P | 2.5 | Al-H | 2.5 | Zn-C | 2.4 | Co-N | 0.1 | - | 0 | C | 8 | 1 | |
| | 18 | Mg-P | 10.6 | - | 0 | Al-H | 2.5 | Zn-C | 2.4 | Ti-N | 2.5 | - | 0 | C | 8 | 1 | |
| | 19 | Mg-P | 2.5 | Mn-P | 2.5 | Al-H | 2.5 | Zn-C | 2.4 | Sr-N | 0.1 | - | 0 | C | 8 | 1 | |
| | 20 | - | 0 | Mn-P | 2.5 | - | 0 | - | 0 | Ni-H | 5.0 | Sr-C | 2.5 | C | 8 | 1 | |
| | 21 | Mg-P | 2.5 | Mn-C | 2.5 | Al-H | 5.0 | - | 0 | - | 0 | - | 0 | C | 8 | 1 | |
| | 22 | Mg-P | 2.5 | Mn-C | 2.5 | Al-H | 2.5 | Zn-C | 2.5 | - | 0 | - | 0 | C | 8 | 1 | |
| | 23 | Mg-P | 2.5 | Mn-P | 2.5 | Al-H | 2.5 | Zn-C | 2.5 | - | 0 | - | 0 | C | 8 | 1 | |
| | 24 | Mg-P | 2.5 | Mn-P | 2.5 | Al-H | 2.5 | Zn-N | 2.5 | - | 0 | - | 0 | C | 8 | 1 | |
| | 25 | Mg-P | 2.5 | Mn-P | 2.5 | Al-H | 2.5 | Zn-C | 2.5 | - | 0 | - | 0 | C | 8 | 1 | |

Table 3

| | | Metal sheet | Organic Coating | | | | | | | | | | | | | | |
|---|---|---|---|---|---|---|---|---|---|---|---|---|---|---|---|---|---|
| | | | Bisphenol epoxy resin (a) | Phosphorylated epoxy resin (b) | | | | Epoxy resin having primary hydroxyl group (C) | | | Emulsi-fier | Glycoluril resin | | Amino resin | | Urethane resin | |
| | | | | Epoxy equi-valent | P-OH equi-valent | Type of resin b | Part by mass | Epoxy equi-valent | Type of resin c | Part by mass | | Type | Part by mass | Type | Part by mass | Type | Part by mass |
| EXAMPLE | 26 | A | 0 | 500 | 500 | b1 | 4 | 2000 | c1 | 58 | Nonionic | C | 9 | - | 0 | C | 11 |
| | 27 | A | 0 | 850 | 150 | b1 | 4 | 2000 | c1 | 58 | Nonionic | C | 9 | - | 0 | C | 11 |
| | 28 | A | 0 | 150 | 850 | b1 | 4 | 2000 | c1 | 58 | Nonionic | C | 9 | - | 0 | C | 11 |
| | 29 | A | 0 | 300 | 500 | b2 | 4 | 2000 | c1 | 58 | Nonionic | C | 9 | - | 0 | C | 11 |
| | 30 | A | 0 | 300 | 500 | b3 | 4 | 2000 | c1 | 58 | Nonionic | C | 9 | - | 0 | C | 11 |
| | 31 | A | 0 | 300 | 500 | b1 | 4 | 500 | c1 | 58 | Nonionic | C | 9 | - | 0 | C | 11 |
| | 32 | A | 0 | 300 | 500 | b1 | 4 | 5000 | c1 | 58 | Nonionic | C | 9 | - | 0 | C | 11 |
| | 33 | A | 58 | 300 | 500 | b1 | 4 | - | - | 0 | Nonionic | C | 9 | - | 0 | C | 11 |
| | 34 | A | 0 | 300 | 500 | b1 | 4 | 2000 | c2 | 58 | Nonionic | C | 9 | - | 0 | C | 11 |
| | 35 | A | 0 | 300 | 500 | b1 | 4 | 2000 | c3 | 58 | Nonionic | C | 9 | - | 0 | C | 11 |
| | 36 | A | 0 | 300 | 500 | b1 | 4 | 2000 | c1 | 58 | Amine | C | 9 | - | 0 | C | 11 |
| | 37 | A | 0 | 300 | 500 | b1 | 4 | 2000 | c1 | 58 | Nonionic | C | 9 | - | 0 | C | 11 |
| | 38 | A | 0 | 300 | 500 | b1 | 4 | 2000 | c1 | 58 | Anionic | C | 9 | - | 0 | C | 11 |
| | 39 | A | 0 | 300 | 500 | b1 | 4 | 2000 | c1 | 58 | Nonionic | A | 9 | - | 0 | C | 11 |
| | 40 | A | 0 | 300 | 500 | b1 | 4 | 2000 | c1 | 58 | Nonionic | B | 9 | - | 0 | C | 11 |
| | 41 | A | 0 | 300 | 500 | b1 | 4 | 2000 | c1 | 58 | Nonionic | D | 9 | - | 0 | C | 11 |
| | 42 | A | 0 | 300 | 500 | b1 | 4 | 2000 | c1 | 58 | Nonionic | C | 9 | G | 5 | C | 6 |
| | 43 | A | 0 | 300 | 500 | b1 | 4 | 2000 | c1 | 58 | Nonionic | C | 9 | H | 5 | C | 6 |
| | 44 | A | 0 | 300 | 500 | b1 | 4 | 2000 | c1 | 58 | Nonionic | C | 9 | - | 0 | A | 11 |
| | 45 | A | 0 | 300 | 500 | b1 | 4 | 2000 | c1 | 58 | Nonionic | C | 9 | - | 0 | B | 11 |
| | 46 | A | 0 | 300 | 500 | b1 | 4 | 2000 | c1 | 58 | Nonionic | C | 9 | - | 0 | D | 11 |
| | 47 | A | 0 | 300 | 500 | b1 | 4 | 2000 | c1 | 58 | Nonionic | C | 9 | - | 0 | C | 11 |
| | 48 | A | 0 | 300 | 500 | b1 | 4 | 2000 | c1 | 58 | Nonionic | C | 9 | - | 0 | C | 11 |

Table 4

| | | Organic Coating | | | | | | | | | | | | | | | | Temp. after 20 sec in furnace °C |
|---|---|---|---|---|---|---|---|---|---|---|---|---|---|---|---|---|---|---|
| | | Metal compound | | | | | | | | | | | | Water repellent | | Film thick-ness, µm | | |
| | | Mg compound | | Mn compound | | Al compound | | Zn compound | | Other metal compounds | | | | | | | | |
| | | Type | part by mass | Type | part by mass | Type | part by mass | Type | part by mass | Type | part by mass | Type | part by mass | Type | part by mass | | | |
| EXAMPLE | 26 | Mg-P | 2.5 | Mn-C | 2.5 | Al-H | 2.5 | Zn-N | 2.5 | - | 0 | - | 0 | C | 8 | 1 | | 180 |
| | 27 | Mg-P | 2.5 | Mn-C | 2.5 | Al-H | 2.5 | Zn-N | 2.5 | - | 0 | - | 0 | C | 8 | 1 | | |
| | 28 | Mg-P | 2.5 | Mn-C | 2.5 | Al-H | 2.5 | Zn-N | 2.5 | - | 0 | - | 0 | C | 8 | 1 | | |
| | 29 | Mg-P | 2.5 | Mn-C | 2.5 | Al-H | 2.5 | Zn-N | 2.5 | - | 0 | - | 0 | C | 8 | 1 | | |
| | 30 | Mg-P | 2.5 | Mn-C | 2.5 | Al-H | 2.5 | Zn-N | 2.5 | - | 0 | - | 0 | C | 8 | 1 | | |
| | 31 | Mg-P | 2.5 | Mn-C | 2.5 | Al-H | 2.5 | Zn-N | 2.5 | - | 0 | - | 0 | C | 8 | 1 | | |
| | 32 | Mg-P | 2.5 | Mn-C | 2.5 | Al-H | 2.5 | Zn-N | 2.5 | - | 0 | - | 0 | C | 8 | 1 | | |
| | 33 | Mg-P | 2.5 | Mn-C | 2.5 | Al-H | 2.5 | Zn-N | 2.5 | - | 0 | - | 0 | C | 8 | 1 | | |
| | 34 | Mg-P | 2.5 | Mn-C | 2.5 | Al-H | 2.5 | Zn-N | 2.5 | - | 0 | - | 0 | C | 8 | 1 | | |
| | 35 | Mg-P | 2.5 | Mn-C | 2.5 | Al-H | 2.5 | Zn-N | 2.5 | - | 0 | - | 0 | C | 8 | 1 | | |
| | 36 | Mg-P | 2.5 | Mn-C | 2.5 | Al-H | 2.5 | Zn-N | 2.5 | - | 0 | - | 0 | C | 8 | 1 | | |
| | 37 | Mg-P | 2.5 | Mn-C | 2.5 | Al-H | 2.5 | Zn-N | 2.5 | - | 0 | - | 0 | C | 8 | 1 | | |
| | 38 | Mg-P | 2.5 | Mn-C | 2.5 | Al-H | 2.5 | Zn-N | 2.5 | - | 0 | - | 0 | C | 8 | 1 | | |
| | 39 | Mg-P | 2.5 | Mn-C | 2.5 | Al-H | 2.5 | Zn-N | 2.5 | - | 0 | - | 0 | C | 8 | 1 | | |
| | 40 | Mg-P | 2.5 | Mn-C | 2.5 | Al-H | 2.5 | Zn-N | 2.5 | - | 0 | - | 0 | C | 8 | 1 | | |
| | 41 | Mg-P | 2.5 | Mn-C | 2.5 | Al-H | 2.5 | Zn-N | 2.5 | - | 0 | - | 0 | C | 8 | 1 | | |
| | 42 | Mg-P | 2.5 | Mn-C | 2.5 | Al-H | 2.5 | Zn-N | 2.5 | - | 0 | - | 0 | C | 8 | 1 | | |
| | 43 | Mg-P | 2.5 | Mn-C | 2.5 | Al-H | 2.5 | Zn-N | 2.5 | - | 0 | - | 0 | C | 8 | 1 | | |
| | 44 | Mg-P | 2.5 | Mn-C | 2.5 | Al-H | 2.5 | Zn-N | 2.5 | - | 0 | - | 0 | C | 8 | 1 | | |
| | 45 | Mg-P | 2.5 | Mn-C | 2.5 | Al-H | 2.5 | Zn-N | 2.5 | - | 0 | - | 0 | C | 8 | 1 | | |
| | 46 | Mg-P | 2.5 | Mn-C | 2.5 | Al-H | 2.5 | Zn-N | 2.5 | - | 0 | - | 0 | C | 8 | 1 | | |
| | 47 | Mg-P | 4.5 | Mn-C | 4.5 | Al-H | 4.5 | Zn-N | 4.5 | - | 0 | - | 0 | – | 0 | 1 | | |
| | 48 | Mg-P | 2.5 | Mn-C | 2.5 | Al-H | 2.5 | Zn-N | 2.5 | - | 0 | - | 0 | A | 8 | 1 | | |

Table 5

| | | Metal sheet | Organic Coating | | | | | | | | | | | | | | | |
|---|---|---|---|---|---|---|---|---|---|---|---|---|---|---|---|---|---|---|
| | | | Bisphenol epoxy resin (a) | Phosphorylated epoxy resin (b) | | | | Epoxy resin having primary hydroxyl group (C) | | | Emulsifier | Glycoluril resin | | Amino resin | | Urethane resin | | |
| | | | | Epoxy equivalent | P-OH equivalent | Type of resin b | Part by mass | Epoxy equivalent | Type of resin c | Part by mass | | Type | Part by mass | Type | Part by mass | Type | Part by mass |
| EXAMPLE | 49 | A | 0 | 300 | 500 | b1 | 4 | 2000 | c1 | 58 | Nonionic | C | 9 | - | 0 | C | 11 |
| | 50 | A | 0 | 300 | 500 | b1 | 4 | 2000 | c1 | 58 | Nonionic | C | 9 | - | 0 | C | 11 |
| | 51 | A | 0 | 300 | 500 | b1 | 4 | 2000 | c1 | 58 | Nonionic | C | 9 | - | 0 | C | 11 |
| | 52 | A | 0 | 300 | 500 | b1 | 4 | 2000 | c1 | 58 | Nonionic | C | 9 | - | 0 | C | 11 |
| | 53 | A | 0 | 300 | 500 | b1 | 4 | 2000 | c1 | 58 | Nonionic | C | 9 | - | 0 | C | 11 |
| | 54 | A | 0 | 300 | 500 | b1 | 4 | 2000 | c1 | 58 | Nonionic | C | 9 | - | 0 | C | 11 |
| | 55 | A | 0 | 300 | 500 | b2 | 4 | 2000 | c1 | 58 | Nonionic | C | 9 | - | 0 | C | 11 |
| | 56 | A | 0 | 300 | 500 | b1 | 4 | 2000 | c1 | 58 | Nonionic | C | 9 | - | 0 | C | 11 |
| | 57 | A | 0 | 300 | 500 | b1 | 4 | 2000 | c1 | 58 | Nonionic | C | 9 | - | 0 | C | 11 |
| | 58 | A | 0 | 300 | 500 | b1 | 4 | 2000 | c1 | 58 | Nonionic | C | 9 | - | 0 | C | 11 |
| | 59 | A | 0 | 300 | 500 | b1 | 9 | 2000 | c1 | 63 | Nonionic | C | 10 | - | 0 | - | 0 |
| | 60 | A | 0 | 300 | 500 | b1 | 4 | 2000 | c1 | 58 | Nonionic | C | 9 | - | 0 | C | 11 |
| | 61 | A | 0 | 300 | 1300 | b1 | 4 | 3000 | c1 | 58 | Nonionic | C | 9 | - | 0 | C | 11 |
| | 62 | A | 0 | 300 | 500 | b1 | 4 | 6000 | c1 | 58 | Nonionic | C | 9 | - | 0 | C | 11 |
| | 63 | G | 0 | 300 | 500 | b1 | 4 | 2000 | c1 | 58 | Nonionic | C | 9 | - | 0 | C | 11 |
| | 64 | H | 0 | 300 | 500 | b1 | 4 | 2000 | c1 | 58 | Nonionic | C | 9 | - | 0 | C | 11 |
| | 65 | I | 0 | 300 | 500 | b1 | 4 | 2000 | c1 | 58 | Nonionic | C | 9 | - | 0 | C | 11 |
| | 66 | J | 0 | 300 | 500 | b1 | 4 | 2000 | c1 | 58 | Nonionic | C | 9 | - | 0 | C | 11 |
| | 67 | K | 0 | 300 | 500 | b1 | 4 | 2000 | c1 | 58 | Nonionic | C | 9 | - | 0 | C | 11 |
| | 68 | L | 0 | 300 | 500 | b1 | 4 | 2000 | c1 | 58 | Nonionic | C | 9 | - | 0 | C | 11 |
| | 69 | M | 0 | 300 | 500 | b1 | 4 | 2000 | c1 | 58 | Nonionic | C | 9 | - | 0 | C | 11 |
| | 70 | N | 0 | 300 | 500 | b1 | 4 | 2000 | c1 | 58 | Nonionic | C | 9 | - | 0 | C | 11 |
| | 71 | A | 0 | 300 | 500 | b1 | 4 | 2000 | c1 | 58 | Nonionic | C | 9 | - | 0 | C | 11 |
| | 72 | A | 0 | 300 | 500 | b1 | 4 | 2000 | c1 | 58 | Nonionic | C | 9 | - | 0 | C | 11 |
| | 73 | A | 0 | 300 | 500 | b1 | 4 | 2000 | c1 | 58 | Nonionic | C | 9 | - | 0 | C | 11 |

Table 6

| | | Organic Coating | | | | | | | | | | | | | | | | Temp. after 20 sec in furnace °C |
|---|---|---|---|---|---|---|---|---|---|---|---|---|---|---|---|---|---|---|
| | | Metal compound | | | | | | | | | | | | Water repellent | | Film thick-ness, µm | | |
| | | Mg compound | | Mn compound | | Al compound | | Zn compound | | Other metal compounds | | | | | | | | |
| | | Type | part by mass | Type | part by mass | Type | part by mass | Type | part by mass | Type | part by mass | Type | part by mass | Type | part by mass | | |
| EXAMPLE | 49 | Mg-P | 2.5 | Mn-C | 2.5 | Al-H | 2.5 | Zn-N | 2.5 | - | 0 | - | 0 | B | 8 | 1 | 180 |
| | 50 | Mg-P | 2.5 | Mn-C | 2.5 | Al-H | 2.5 | Zn-N | 2.5 | - | 0 | - | 0 | D | 8 | 1 | |
| | 51 | Mg-P | 2.5 | Mn-C | 2.5 | Al-H | 2.5 | Zn-N | 2.5 | - | 0 | - | 0 | A+D | 4+4 | 1 | |
| | 52 | Mg-P | 2.5 | Mn-C | 2.5 | Al-H | 2.5 | Zn-N | 2.5 | - | 0 | - | 0 | B+D | 4+4 | 1 | |
| | 53 | Mg-P | 2.5 | Mn-C | 2.5 | Al-H | 2.5 | Zn-N | 2.5 | - | 0 | - | 0 | C+D | 4+4 | 1 | |
| | 54 | Mg-P | 2.5 | Mn-C | 2.5 | Al-H | 2.5 | Zn-N | 2.5 | - | 0 | - | 0 | C | 8 | 0.3 | |
| | 55 | Mg-P | 2.5 | Mn-C | 2.5 | Al-H | 2.5 | Zn-N | 2.5 | - | 0 | - | 0 | C | 8 | 0.5 | |
| | 56 | Mg-P | 2.5 | Mn-C | 2.5 | Al-H | 2.5 | Zn-N | 2.5 | - | 0 | - | 0 | C | 8 | 2 | |
| | 57 | Mg-P | 2.5 | Mn-C | 2.5 | Al-H | 2.5 | Zn-N | 2.5 | - | 0 | - | 0 | C | 8 | 3 | |
| | 58 | Mg-P | 2.5 | Mn-C | 2.5 | Al-H | 2.5 | Zn-N | 2.5 | - | 0 | - | 0 | C | 8 | 5 | |
| | 59 | Mg-P | 4.5 | Mn-C | 4.5 | Al-H | 4.5 | Zn-N | 4.5 | - | 0 | - | 0 | - | 0 | 1 | |
| | 60 | Mg-P | 2.5 | Mn-C | 2.5 | Al-H | 2.5 | Zn-N | 2.5 | - | 0 | - | 0 | C | 8 | 1 | |
| | 61 | Mg-P | 2.5 | Mn-C | 2.5 | Al-H | 2.5 | Zn-N | 2.5 | - | 0 | - | 0 | C | 8 | 1 | |
| | 62 | Mg-P | 2.5 | Mn-C | 2.5 | Al-H | 2.5 | Zn-N | 2.5 | - | 0 | - | 0 | C | 8 | 1 | |
| | 63 | Mg-P | 2.5 | Mn-C | 2.5 | Al-H | 2.5 | Zn-N | 2.5 | - | 0 | - | 0 | C | 8 | 1 | |
| | 64 | Mg-P | 2.5 | Mn-C | 2.5 | Al-H | 2.5 | Zn-N | 2.5 | - | 0 | - | 0 | C | 8 | 1 | |
| | 65 | Mg-P | 2.5 | Mn-C | 2.5 | Al-H | 2.5 | Zn-N | 2.5 | - | 0 | - | 0 | C | 8 | 1 | |
| | 66 | Mg-P | 2.5 | Mn-C | 2.5 | Al-H | 2.5 | Zn-N | 2.5 | - | 0 | - | 0 | C | 8 | 1 | |
| | 67 | Mg-P | 2.5 | Mn-C | 2.5 | Al-H | 2.5 | Zn-N | 2.5 | - | 0 | - | 0 | C | 8 | 1 | |
| | 68 | Mg-P | 2.5 | Mn-C | 2.5 | Al-H | 2.5 | Zn-N | 2.5 | - | 0 | - | 0 | C | 8 | 1 | |
| | 69 | Mg-P | 2.5 | Mn-C | 2.5 | Al-H | 2.5 | Zn-N | 2.5 | - | 0 | - | 0 | C | 8 | 1 | |
| | 70 | Mg-P | 2.5 | Mn-C | 2.5 | Al-H | 2.5 | Zn-N | 2.5 | - | 0 | - | 0 | C | 8 | 1 | |
| | 71 | Mg-P | 2.5 | Mn-C | 2.5 | Al-H | 0.5 | Zn-C | 2.5 | Na-V | 0 | - | 0 | C | 8 | 1 | |
| | 72 | Mg-P | 2.5 | Mn-C | 2.5 | Al-H | 0.5 | Zn-C | 2.5 | Na-Mo | 0 | - | 0 | C | 8 | 1 | |
| | 73 | Mg-P | 2.5 | Mn-C | 2.5 | Al-H | 0.5 | Zn-C | 2.5 | K-B | 0 | - | 0 | C | 8 | 1 | |

Table 7

| | | Metal sheet | Organic Coating | | | | | | | | | | | | | | |
|---|---|---|---|---|---|---|---|---|---|---|---|---|---|---|---|---|---|
| | | | Bisphenol epoxy resin (a) | Phosphorylated epoxy resin (b) | | | | Epoxy resin having primary hydroxyl group (C) | | | Emulsifier | Glycoluril resin | | Amino resin | | Urethane resin | |
| | | | Part by mass | Epoxy equivalent | P-OH equivalent | Type of resin b | Part by mass | Epoxy equivalent | Type of resin c | Part by mass | | Type | Part by mass | Type | Part by mass | Type | Part by mass |
| EXAMPLE | 74 | A | 60 | 0 | 0 | - | 0 | 0 | - | 0 | Nonionic | C | 18 | - | 0 | C | 12 |
| | 75 | A | 0 | 300 | 500 | b3 | 6 | 2000 | c1 | 60 | Nonionic | C | 11 | - | 0 | C | 13 |
| | 76 | A | 0 | 300 | 500 | b1 | 6 | 2000 | c3 | 60 | Nonionic | C | 11 | - | 0 | C | 13 |
| | 77 | A | 48 | 300 | 500 | b1 | 12 | 0 | - | 0 | Nonionic | C | 18 | - | 0 | C | 12 |
| | 78 | A | 13 | 0 | 0 | - | 0 | 2000 | c1 | 53 | Nonionic | C | 11 | - | 0 | C | 13 |
| | 79 | A | 6 | 300 | 500 | b1 | 12 | 2000 | c1 | 42 | Nonionic | C | 18 | - | 0 | C | 12 |
| | 80 | A | 0 | 0 | 0 | - | 0 | 2000 | c1 | 60 | Nonionic | C | 18 | - | 0 | C | 12 |
| | 81 | A | 0 | 300 | 500 | b1 | 60 | 0 | - | 0 | - | C | 18 | - | 0 | C | 12 |
| | 82 | A | 0 | 300 | 500 | b1 | 6 | 2000 | c1 | 60 | Nonionic | C | 11 | - | 0 | C | 13 |
| | 83 | A | 0 | 300 | 500 | b1 | 6 | 2000 | c1 | 60 | Nonionic | C | 11 | - | 0 | C | 13 |
| | 84 | A | 53 | 300 | 500 | b1 | 13 | 0 | - | 0 | Nonionic | C | 11 | - | 0 | C | 13 |
| | 85 | A | 53 | 300 | 500 | b1 | 13 | 0 | - | 0 | Nonionic | C | 11 | - | 0 | C | 13 |
| | 86 | A | 0 | 300 | 500 | b1 | 4 | 2000 | c1 | 58 | Nonionic | C | 9 | - | 0 | E | 11 |
| | 87 | A | 0 | 300 | 500 | b1 | 4 | 2000 | c1 | 58 | Nonionic | C | 9 | - | 0 | F | 11 |
| | 88 | A | 0 | 300 | 500 | b1 | 4 | 2000 | c1 | 58 | Nonionic | C | 9 | - | 0 | G | 11 |
| | 89 | A | 0 | 300 | 500 | b1 | 4 | 2000 | c1 | 58 | Nonionic | C | 9 | - | 0 | C | 11 |
| | 90 | A | 0 | 300 | 500 | b1 | 4 | 2000 | c1 | 58 | Nonionic | C | 9 | - | 0 | C | 11 |
| Comp. Ex. | 1 | A | 0 | 300 | 500 | b1 | 4 | 2000 | c1 | 58 | Nonionic | - | 0 | E | 9 | C | 11 |
| | 2 | A | 0 | 300 | 500 | b1 | 4 | 2000 | c1 | 58 | Nonionic | - | 0 | F | 9 | C | 11 |
| | 3 | A | 0 | 300 | 500 | b1 | 4 | 2000 | c1 | 58 | Nonionic | - | 0 | G | 9 | C | 11 |
| | 4 | A | 0 | 300 | 500 | b1 | 4 | 2000 | c1 | 58 | Nonionic | - | 0 | H | 9 | C | 11 |

Table 8

| | | Organic Coating | | | | | | | | | | | | | | | Temp. after 20 sec in furnace °C |
|---|---|---|---|---|---|---|---|---|---|---|---|---|---|---|---|---|---|
| | | Metal compound | | | | | | | | | | | | Water repellent | | Film thick-ness, µm | |
| | | Mg compound | | Mn compound | | Al compound | | Zn compound | | Other metal compounds | | | | | | | |
| | | Type | part by mass | Type | part by mass | Type | part by mass | Type | part by mass | Type | part by mass | Type | part by mass | Type | part by mass | | |
| EXAMPLE | 74 | Mg-P | 2.5 | Mn-C | 2.5 | Al-H | 2.5 | Zn-N | 2.5 | - | 0 | - | 0 | C | 8 | 1 | 180 |
| | 75 | Mg-P | 2.5 | Mn-C | 2.5 | Al-H | 2.5 | Zn-N | 2.5 | - | 0 | - | 0 | C | 8 | 1 | |
| | 76 | Mg-P | 2.5 | Mn-C | 2.5 | Al-H | 2.5 | Zn-N | 2.5 | - | 0 | - | 0 | C | 8 | 1 | |
| | 77 | Mg-P | 2.5 | Mn-C | 2.5 | Al-H | 2.5 | Zn-N | 2.5 | - | 0 | - | 0 | C | 8 | 1 | |
| | 78 | Mg-P | 2.5 | Mn-C | 2.5 | Al-H | 2.5 | Zn-N | 2.5 | - | 0 | - | 0 | C | 8 | 1 | |
| | 79 | Mg-P | 2.5 | Mn-C | 2.5 | Al-H | 2.5 | Zn-N | 2.5 | - | 0 | - | 0 | C | 8 | 1 | |
| | 80 | Mg-P | 2.5 | Mn-C | 2.5 | Al-H | 2.5 | Zn-N | 2.5 | - | 0 | - | 0 | C | 8 | 1 | |
| | 81 | Mg-P | 2.5 | Mn-C | 2.5 | Al-H | 2.5 | Zn-N | 2.5 | - | 0 | - | 0 | C | 8 | 1 | |
| | 82 | Mg-P | 2.5 | Mn-C | 2.5 | Al-H | 2.5 | Zn-N | 2.5 | - | 0 | - | 0 | C | 8 | 1 | 160 |
| | 83 | Mg-P | 2.5 | Mn-C | 2.5 | Al-H | 2.5 | Zn-N | 2.5 | - | 0 | - | 0 | C | 8 | 1 | 220 |
| | 84 | Mg-P | 2.5 | Mn-C | 2.5 | Al-H | 2.5 | Zn-N | 2.5 | - | 0 | - | 0 | C | 8 | 1 | 160 |
| | 85 | Mg-P | 2.5 | Mn-C | 2.5 | Al-H | 2.5 | Zn-N | 2.5 | - | 0 | - | 0 | C | 8 | 1 | 220 |
| | 86 | Mg-P | 2.5 | Mn-C | 2.5 | Al-H | 2.5 | Zn-N | 2.5 | - | 0 | - | 0 | C | 8 | 1 | 180 |
| | 87 | Mg-P | 2.5 | Mn-C | 2.5 | Al-H | 2.5 | Zn-N | 2.5 | - | 0 | - | 0 | C | 8 | 1 | |
| | 88 | Mg-N | 2.5 | Mn-C | 2.5 | Al-H | 2.5 | Zn-N | 2.5 | - | 0 | - | 0 | C | 8 | 1 | |
| | 89 | Mg-P | 2.5 | Mn-C | 2.5 | Al-F | 5 | - | 0 | - | 0 | - | 0 | C | 8 | 1 | |
| | 90 | Mg-B | 2.5 | Mn-C | 2.5 | - | 0 | - | 0 | Zr-H | 5 | - | 0 | C | 8 | 1 | |
| Comp. Ex. | 1 | Mg-P | 2.5 | Mn-C | 2.5 | Al-H | 2.5 | Zn-N | 2.5 | - | 0 | - | 0 | C | 8 | 1 | |
| | 2 | Mg-P | 2.5 | Mn-C | 2.5 | Al-H | 2.5 | Zn-N | 2.5 | - | 0 | - | 0 | C | 8 | 1 | |
| | 3 | Mg-P | 2.5 | Mn-C | 2.5 | Al-H | 2.5 | Zn-N | 2.5 | - | 0 | - | 0 | C | 8 | 1 | |
| | 4 | Mg-P | 2.5 | Mn-C | 2.5 | Al-H | 2.5 | Zn-N | 2.5 | - | 0 | - | 0 | C | 8 | 1 | |

Table 9

| | | SST/ corrosion resistance of flat area | SST/ adhesion of crosscut area | CCT/ corrosion resistance of formed area | Conductivity after corrosion test | Adhesion to the overlying layer | Fingerprint resistance |
|---|---|---|---|---|---|---|---|
| EXAMPLE | 1 | ◎ | ◎ | ◎ | ○ | ◎ | ◎ |
| | 2 | ◎ | ◎ | ◎ | ○ | ◎ | ◎ |
| | 3 | ◎ | ◎ | ◎ | ○ | ◎ | ◎ |
| | 4 | ◎ | ◎ | ◎ | ○ | ◎ | ◎ |
| | 5 | ◎ | ◎ | ◎ | ○ | ◎ | ◎ |
| | 6 | ◎ | ◎ | ◎ | ○ | ◎ | ◎ |
| | 7 | ◎ | ◎ | ◎ | ○ | ◎ | ◎ |
| | 8 | ◎ | ◎ | ◎ | ○ | ◎ | ◎ |
| | 9 | ◎ | ◎ | ◎ | ○ | ◎ | ◎ |
| | 10 | ◎ | ◎ | ◎ | ○ | ◎ | ◎ |
| | 11 | ◎ | ◎ | ◎ | ○ | ◎ | ◎ |
| | 12 | ◎ | ◎ | ◎ | ○ | ◎ | ◎ |
| | 13 | ◎ | ◎ | ◎ | ○ | ◎ | ◎ |
| | 14 | ◎ | ◎ | ◎ | ○ | ◎ | ◎ |
| | 15 | ◎ | ◎ | ◎ | ○ | ◎ | ◎ |
| | 16 | ◎ | ◎ | ◎ | ○ | ◎ | ◎ |
| | 17 | ◎ | ◎ | ◎ | ○ | ◎ | ◎ |
| | 18 | ◎ | ◎ | ◎ | ○ | ◎ | ◎ |
| | 19 | ◎ | ◎ | ◎ | ○ | ◎ | ◎ |
| | 20 | ◎ | ◎ | ◎ | ○ | ◎ | ◎ |
| | 21 | ◎ | ◎ | ◎ | ○ | ◎ | ◎ |
| | 22 | ◎ | ◎ | ◎ | ○ | ◎ | ◎ |
| | 23 | ◎ | ◎ | ◎ | ○ | ◎ | ◎ |
| | 24 | ◎ | ◎ | ◎ | ○ | ◎ | ◎ |
| | 25 | ◎ | ◎ | ◎ | ○ | ◎ | ◎ |

Table 10

| | | SST/ corrosion resistance of flat area | SST/ adhesion of crosscut area | CCT/ corrosion resistance of formed area | Conductivity after corrosion test | Adhesion to the overlying layer | Fingerprint resistance |
|---|---|---|---|---|---|---|---|
| EXAMPLE | 26 | ◎ | ◎ | ◎ | ○ | ◎ | ◎ |
| | 27 | ◎ | ◎ | ◎ | ○ | ◎ | ◎ |
| | 28 | ◎ | ◎ | ◎ | ○ | ◎ | ◎ |
| | 29 | ◎ | ◎ | ◎ | ○ | ◎ | ◎ |
| | 30 | ◎ | ◎ | ◎ | ○ | ◎ | ◎ |
| | 31 | ◎ | ◎ | ◎ | ○ | ◎ | ◎ |
| | 32 | ◎ | ◎ | ◎ | ○ | ◎ | ◎ |
| | 33 | Δ | ○ | Δ | ○ | ◎ | ◎ |
| | 34 | ◎ | ◎ | ○ | ○ | ◎ | ◎ |
| | 35 | ◎ | ◎ | ◎ | ○ | ◎ | ◎ |
| | 36 | ◎ | ◎ | ◎ | ○ | ◎ | ◎ |
| | 37 | ◎ | ◎ | ◎ | ○ | ◎ | ◎ |
| | 38 | ◎ | ◎ | ◎ | ○ | ◎ | ◎ |
| | 39 | ◎ | ◎ | ◎ | ○ | ◎ | ◎ |
| | 40 | ◎ | ◎ | ◎ | ○ | ◎ | ◎ |
| | 41 | ◎ | ◎ | ◎ | ○ | ◎ | ◎ |
| | 42 | ○ | ○ | ○ | ○ | ◎ | ◎ |
| | 43 | ○ | ○ | ○ | ○ | ◎ | ◎ |
| | 44 | ○ | ○ | ○ | ○ | ◎ | ◎ |
| | 45 | ○ | ○ | ○ | ○ | ◎ | ◎ |
| | 46 | ○ | ○ | ○ | ○ | ◎ | ◎ |
| | 47 | ○ | ○ | ○ | ○ | ◎ | ◎ |
| | 48 | ○ | ○ | ○ | ○ | ◎ | ◎ |

Table 11

| | | SST/ corrosion resistance of flat area | SST/ adhesion of crosscut area | CCT/ corrosion resistance of formed area | Conductivity after corrosion test | Adhesion to the overlying layer | Fingerprint resistance |
|---|---|---|---|---|---|---|---|
| EXAMPLE | 49 | ◎ | ◎ | ◎ | ○ | ◎ | ○ |
| | 50 | ◎ | ◎ | ◎ | ○ | ◎ | ◎ |
| | 51 | ◎ | ◎ | ◎ | ○ | ○ | ◎ |
| | 52 | ◎ | ◎ | ◎ | ○ | ◎ | ◎ |
| | 53 | ◎ | ◎ | ◎ | ○ | ◎ | ◎ |
| | 54 | ◎ | ◎ | ◎ | ○ | ◎ | ◎ |
| | 55 | ◎ | ◎ | ◎ | ○ | ◎ | ◎ |
| | 56 | ◎ | ◎ | ◎ | ○ | ◎ | ◎ |
| | 57 | ◎ | ◎ | ◎ | ○ | ◎ | ◎ |
| | 58 | ◎ | ◎ | ◎ | ○ | ◎ | ◎ |
| | 59 | ◎ | ◎ | ◎ | ○ | ◎ | ◎ |
| | 60 | ◎ | ◎ | ◎ | ○ | ◎ | ◎ |
| | 61 | ◎ | ◎ | ◎ | ○ | ◎ | ◎ |
| | 62 | ◎ | ◎ | ◎ | ○ | ◎ | ◎ |
| | 63 | Δ | Δ | ○ | Δ | ◎ | ◎ |
| | 64 | Δ | Δ | ○ | Δ | ◎ | ◎ |
| | 65 | ◎ | ◎ | ○ | ○ | ◎ | ◎ |
| | 66 | ○ | ○ | ○ | Δ | ◎ | ◎ |
| | 67 | ◎ | ◎ | ○ | Δ | ◎ | ◎ |
| | 68 | ◎ | ◎ | ○ | Δ | ◎ | ◎ |
| | 69 | ○ | ○ | ○ | Δ | ◎ | ◎ |
| | 70 | ◎ | ◎ | ◎ | ○ | ◎ | ◎ |
| | 71 | ◎ | ◎ | ◎ | ○ | ◎ | ◎ |
| | 72 | ◎ | ◎ | ◎ | ○ | ◎ | ◎ |
| | 73 | ◎ | ◎ | ◎ | ○ | ◎ | ◎ |

Table 12

| | | SST/ corrosion resistance of flat area | SST/ adhesion of crosscut area | CCT/ corrosion resistance of formed area | Conductivity after corrosion test | Adhesion to the overlying layer | Fingerprint resistance |
|---|---|---|---|---|---|---|---|
| EXAMPLE | 74 | ◎ | ◎ | ◎ | ○ | ◎ | ◎ |
| | 75 | ◎ | ◎ | ◎ | ○ | ◎ | ◎ |
| | 76 | ◎ | ◎ | ◎ | ○ | ◎ | ◎ |
| | 77 | ◎ | ◎ | ◎ | ○ | ◎ | ◎ |
| | 78 | Δ | Δ | Δ | Δ | ◎ | ◎ |
| | 79 | ◎ | ◎ | ◎ | ○ | ◎ | ◎ |
| | 80 | Δ | Δ | Δ | Δ | ◎ | ◎ |
| | 81 | ◎ | ◎ | ◎ | ○ | ◎ | ◎ |
| | 82 | ◎ | ◎ | ◎ | ○ | Δ | Δ |
| | 83 | ◎ | ◎ | ◎ | ○ | ◎ | ◎ |
| | 84 | ◎ | ◎ | ◎ | ○ | ◎ | ◎ |
| | 85 | ◎ | ◎ | ◎ | ○ | ◎ | ◎ |
| | 86 | ◎ | ◎ | ◎ | ○ | ◎ | ◎ |
| | 87 | ◎ | ◎ | ◎ | ○ | ◎ | ◎ |
| | 88 | ◎ | ◎ | ◎ | ○ | ◎ | ◎ |
| | 89 | ○ | ○ | ○ | ○ | ◎ | ◎ |
| | 90 | ○ | ○ | ○ | ○ | ◎ | ◎ |
| Com. Ex. | 1 | × | × | × | ○ | Δ | ◎ |
| | 2 | × | × | × | ○ | Δ | ◎ |
| | 3 | × | × | × | ○ | Δ | ◎ |
| | 4 | × | × | × | ○ | Δ | ◎ |

[Examples 91 to 165 and Comparative Examples 5 to 10]

The epoxy resins (a) to (c), the glycoluril resins A to D, the benzoguanamine resins E to F and the melamine resins G to H (these two resins being referred to as the amino resins), the urethane resins A to G, and the water repellents A to D as described above and the metal compounds as described below were added to water at the proportion (in relation to 100 parts by mass of the total solid content) shown in Tables 13 to 20, and the mixture was stirred at room temperature to prepare water surface treating agents. The resulting surface treating agents were roll coated on the metal sheets A to N as described below. The temperature was elevated so that the temperature of the metal sheet reached 180°C in 20 seconds to form an organic coating having a thickness of 0.3 to 5 μm. The test specimens thereby produced had the organic coatings having the properties as shown in Tables 21 to 24.

Metal compound:

Metal compound Mg-P: magnesium phosphate
Metal compound Mg-A: magnesium acetate
Metal compound Mg-S: magnesium sulfate
Metal compound Mn-C: manganese carbonate

Metal compound Mn-P: manganese phosphate
Metal compound Mn-A: manganese acetate
Metal compound Al-P: aluminum phosphate
Metal compound Al-A: aluminum acetate
Metal compound Zn-P: zinc phosphate
Metal compound Zn-A: zinc acetate
Metal compound Zn-C: zinc carbonate
Metal compound Sn-P: tin phosphate
Metal compound Sn-S: tin sulfate
Metal compound Fe-S: iron sulfate
Metal compound V-S: iron vanadate
Metal compound Ba-P: barium phosphate
Metal compound Ba-S: barium sulfate
Metal compound Co-P: cobalt phosphate
Metal compound Co-C: cobalt carbonate
Metal compound Co-A: cobalt acetate
Metal compound Na-V: sodium vanadate
Metal compound Na-Mo: sodium molybdate
Metal compound K-B: potassium borate

Each test piece was evaluated for the following properties (flat area corrosion resistance and crosscut adhesion in SST environment, formed area corrosion resistance in CCT environment, electroconductivity after the corrosion test, adhesion to the overlying coating, and fingerprint resistance) by the test procedures as described above.

Table 13

| | | Organic coating | | | | | | | | | | | | | | | | | Temp. after 20 sec in furnace °C |
|---|---|---|---|---|---|---|---|---|---|---|---|---|---|---|---|---|---|---|---|
| | | Bis-phenol epoxy resin (a) | Phosphorylated epoxy resin (b) | | | | Epoxy resin having primary hydroxyl group (C) | | | Emulsi-fier | Glycoluril resin | | Amino resin | | Urethane resin | | Water repellent | | |
| | | Part by mass | Epoxy equi-val-ent | P-OH equi-val-ent | Type of resin b | Part by mass | Epoxy equi-valent | Type of resin c | Part by mass | | Type | Part by mass | Type | Part by mass | Type | Part by mass | Type | Part by mass | |
| EXAMPLE | 1 | 0 | 300 | 500 | b1 | 4 | 2000 | c1 | 58 | Nonionic | C | 9 | - | 0 | C | 11 | C | 8 | 180 |
| | 2 | 0 | 300 | 500 | b1 | 4 | 2000 | c1 | 58 | Nonionic | C | 9 | - | 0 | C | 11 | C | 8 | |
| | 3 | 0 | 300 | 500 | b1 | 4 | 2000 | c1 | 58 | Nonionic | C | 9 | - | 0 | C | 11 | C | 8 | |
| | 4 | 0 | 300 | 500 | b1 | 4 | 2000 | c1 | 58 | Nonionic | C | 9 | - | 0 | C | 11 | C | 8 | |
| | 5 | 0 | 300 | 500 | b1 | 4 | 2000 | c1 | 58 | Nonionic | C | 9 | - | 0 | C | 11 | C | 8 | |
| | 6 | 0 | 300 | 500 | b1 | 4 | 2000 | c1 | 58 | Nonionic | C | 9 | - | 0 | C | 11 | C | 8 | |
| | 7 | 0 | 300 | 500 | b1 | 4 | 2000 | c1 | 58 | Nonionic | C | 9 | - | 0 | C | 11 | C | 8 | |
| | 8 | 0 | 300 | 500 | b1 | 4 | 2000 | c1 | 58 | Nonionic | C | 9 | - | 0 | C | 11 | C | 8 | |
| | 9 | 0 | 300 | 500 | b1 | 4 | 2000 | c1 | 58 | Nonionic | C | 9 | - | 0 | C | 11 | C | 8 | |
| | 10 | 0 | 300 | 500 | b1 | 4 | 2000 | c1 | 58 | Nonionic | C | 9 | - | 0 | C | 11 | C | 8 | |
| | 11 | 0 | 300 | 500 | b1 | 4 | 2000 | c1 | 58 | Nonionic | C | 9 | - | 0 | C | 11 | C | 8 | |
| | 12 | 0 | 300 | 500 | b1 | 4 | 2000 | c1 | 58 | Nonionic | C | 9 | - | 0 | C | 11 | C | 8 | |
| | 13 | 0 | 300 | 500 | b1 | 4 | 2000 | c1 | 58 | Nonionic | C | 9 | - | 0 | C | 11 | C | 8 | |
| | 14 | 0 | 300 | 500 | b1 | 4 | 2000 | c1 | 58 | Nonionic | C | 9 | - | 0 | C | 11 | C | 8 | |
| | 15 | 0 | 300 | 500 | b1 | 4 | 2000 | c1 | 58 | Nonionic | C | 9 | - | 0 | C | 11 | C | 8 | |
| | 16 | 0 | 300 | 500 | b1 | 4 | 2000 | c1 | 58 | Nonionic | C | 9 | - | 0 | C | 11 | C | 8 | |
| | 17 | 0 | 300 | 500 | b1 | 4 | 2000 | c1 | 58 | Nonionic | C | 9 | - | 0 | C | 11 | C | 8 | |
| | 18 | 0 | 300 | 500 | b1 | 4 | 2000 | c1 | 58 | Nonionic | C | 9 | - | 0 | C | 11 | C | 8 | |
| | 19 | 0 | 300 | 500 | b1 | 4 | 2000 | c1 | 58 | Nonionic | C | 9 | - | 0 | C | 11 | C | 8 | |
| | 20 | 0 | 300 | 500 | b1 | 4 | 2000 | c1 | 58 | Nonionic | C | 9 | - | 0 | C | 11 | C | 8 | |
| | 21 | 0 | 300 | 500 | b1 | 4 | 2000 | c1 | 58 | Nonionic | C | 9 | - | 0 | C | 11 | C | 8 | |
| | 22 | 0 | 300 | 500 | b1 | 4 | 2000 | c1 | 58 | Nonionic | C | 9 | - | 0 | C | 11 | C | 8 | |
| | 23 | 0 | 300 | 500 | b1 | 4 | 2000 | c1 | 58 | Nonionic | C | 9 | - | 0 | C | 11 | C | 8 | |
| | 24 | 0 | 300 | 500 | b1 | 4 | 2000 | c1 | 48 | Nonionic | C | 9 | - | 0 | C | 11 | C | 8 | |
| | 25 | 0 | 300 | 500 | b1 | 4 | 2000 | c1 | 28 | Nonionic | C | 9 | - | 0 | C | 11 | C | 8 | |

Table 14

| | | Metal sheet | Intermediate layer | | | | | | | | | | | | Organic coating | |
|---|---|---|---|---|---|---|---|---|---|---|---|---|---|---|---|---|
| | | | Metal compound | | | | | | | | | | Resin | Film thickness | Metal | Film thickness |
| | | | Mg compound | | Mn compound | | Al compound | | Zn compound | | Other compound | | | | | |
| | | | Type | Part by mass | Type | Part by mass | Type | Part by mass | Type | Part by mass | Type | Part by mass | Part by mass | nm | | µm |
| EXAMPLE | 1 | A | - | 0 | - | 0 | - | 0 | - | 0 | Co-A | 10 | 90 | 150 | Co | 1.5 |
| | 2 | B | - | 0 | - | 0 | Al-A | 10 | - | 0 | - | 0 | 90 | 150 | Al | 1.5 |
| | 3 | C | - | 0 | - | 0 | Al-A | 10 | - | 0 | - | 0 | 90 | 150 | Al | 1.5 |
| | 4 | D | Mg-A | 10 | - | 0 | - | 0 | - | 0 | - | 0 | 90 | 150 | Mg | 1.5 |
| | 5 | E | - | 0 | Mn-A | 10 | - | 0 | - | 0 | - | 0 | 90 | 150 | Mn | 1.5 |
| | 6 | F | - | 0 | - | 0 | - | 0 | Zn-A | 10 | - | 0 | 90 | 150 | Zn | 1.5 |
| | 7 | A | - | 0 | - | 0 | - | 0 | - | 0 | Fe-S | 10 | 90 | 150 | Fe | 1.5 |
| | 8 | A | - | 0 | - | 0 | - | 0 | - | 0 | Sn-S | 10 | 90 | 150 | Sn | 1.5 |
| | 9 | A | Mg-S | 10 | - | 0 | - | 0 | - | 0 | - | 0 | 90 | 150 | Mg | 1.5 |
| | 10 | A | - | 0 | - | 0 | - | 0 | - | 0 | V-S | 10 | 90 | 150 | V | 1.5 |
| | 11 | A | - | 0 | - | 0 | - | 0 | - | 0 | Bs-S | 10 | 90 | 150 | Ba | 1.5 |
| | 12 | A | - | 0 | Mn-P | 5 | - | 0 | Zn-P | 5 | - | 0 | 90 | 150 | Mn, Zn | 1.5 |
| | 13 | A | Mg-P | 7 | - | 0 | Al-P | 3 | - | 0 | - | 0 | 90 | 150 | Mg, Al | 1.5 |
| | 14 | A | - | 0 | Mn-P | 8 | - | 0 | - | 0 | Co-P | 2 | 90 | 150 | Mn, Co | 1.5 |
| | 15 | A | -- | 0 | - | 0 | Al-P | 7 | - | 0 | Ba-P | 3 | 90 | 150 | Al, Ba | 1.5 |
| | 16 | A | Mg-P | 7 | - | 0 | - | 0 | - | 0 | Co-P | 3 | 90 | 150 | Mg, Co | 1.5 |
| | 17 | A | - | 0 | Mn-C | 10 | - | 0 | - | 0 | - | 0 | 90 | 150 | Mn | 1.5 |
| | 18 | A | - | 0 | - | 0 | - | 0 | - | 0 | Co-C | 10 | 90 | 150 | Co | 1.5 |
| | 19 | A | Mg-P | 2.5 | Mn-P | 2.5 | Al-P | 2.5 | Zn-P | 2.5 | - | 0 | 90 | 150 | Mg, Mn, Al, Zn | 1.5 |
| | 20 | A | Mg-P | 5 | Mn-P | 3 | Al-P | 2 | - | 0 | - | 0 | 90 | 150 | Mg, Mn, Al | 1.5 |
| | 21 | A | - | 0 | - | 0 | Al-P | 5 | Zn-P | 3 | Sn-P | 2 | 90 | 150 | Al, Zn, Sn | 1.5 |
| | 22 | A | Mg-P | 5 | Mn-P | 3 | - | 0 | - | 0 | Sn-P | 2 | 90 | 150 | Mg, Mn, Sn | 1.5 |
| | 23 | A | Mg-P | 2.5 | Mn-P | 2.5 | Al-P | 2.5 | Zn-P | 2.5 | - | 0 | 90 | 30 | Mg, Mn, Al, Zn | 1.5 |
| | 24 | A | Mg-P | 2.5 | Mn-P | 2.5 | Al-P | 2.5 | Zn-P | 2.5 | - | 0 | 90 | 50 | Mg, Mn, Al, Zn | 1.5 |
| | 25 | A | Mg-P | 2.5 | Mn-P | 2.5 | Al-P | 2.5 | Zn-P | 2.5 | - | 0 | 90 | 100 | Mg, Mn, Al, Zn | 1.5 |

Table 15

| | | Organic coating | | | | | | | | | | | | | | | | | Temp. after 20 sec in furnace ℃ |
|---|---|---|---|---|---|---|---|---|---|---|---|---|---|---|---|---|---|---|---|
| | | Bis-phenol epoxy resin (a) | Phosphorylated epoxy resin (b) | | | | Epoxy resin having primary hydroxyl group (C) | | | Emulsi-fier | Glycoluril resin | | Amino resin | | Urethane resin | | Water repellent | | |
| | | Part by mass | Epoxy equi-val-ent | P-OH equi-val-ent | Type of resin b | Part by mass | Epoxy equi-valent | Type of resin c | Part by mass | | Type | Part by mass | Type | Part by mass | Type | Part by mass | Type | Part by mass | |
| EXAMPLE | 26 | 0 | 300 | 500 | b1 | 4 | 2000 | c1 | 58 | Nonionic | C | 9 | - | 0 | C | 11 | C | 8 | 180 |
| | 27 | 0 | 300 | 500 | b1 | 4 | 2000 | c1 | 58 | Nonionic | C | 9 | - | 0 | C | 11 | C | 8 | |
| | 28 | 0 | 300 | 500 | b1 | 4 | 2000 | c1 | 58 | Nonionic | C | 9 | - | 0 | C | 11 | C | 8 | |
| | 29 | 0 | 300 | 500 | b2 | 4 | 2000 | c1 | 58 | Nonionic | C | 9 | - | 0 | C | 11 | C | 8 | |
| | 30 | 0 | 300 | 500 | b3 | 4 | 2000 | c1 | 58 | Nonionic | C | 9 | - | 0 | C | 11 | C | 8 | |
| | 31 | 0 | 300 | 500 | b1 | 4 | 500 | c1 | 58 | Nonionic | C | 9 | - | 0 | C | 11 | C | 8 | |
| | 32 | 0 | 300 | 500 | b1 | 4 | 5000 | c1 | 58 | Nonionic | C | 9 | - | 0 | C | 11 | C | 8 | |
| | 33 | 0 | 500 | 500 | b1 | 4 | 2000 | c1 | 58 | Nonionic | C | 9 | - | 0 | C | 11 | C | 8 | |
| | 34 | 0 | 850 | 150 | b1 | 4 | 2000 | c1 | 58 | Nonionic | C | 9 | - | 0 | C | 11 | C | 8 | |
| | 35 | 0 | 150 | 850 | b1 | 4 | 2000 | c1 | 58 | Nonionic | C | 9 | - | 0 | C | 11 | C | 8 | |
| | 36 | 0 | 300 | 500 | b2 | 4 | 2000 | c1 | 58 | Nonionic | C | 9 | - | 0 | C | 11 | C | 8 | |
| | 37 | 0 | 300 | 500 | b3 | 4 | 2000 | c1 | 58 | Nonionic | C | 9 | - | 0 | C | 11 | C | 8 | |
| | 38 | 0 | 300 | 500 | b1 | 4 | 500 | c1 | 58 | Nonionic | C | 9 | - | 0 | C | 11 | C | 8 | |
| | 39 | 0 | 300 | 500 | b1 | 4 | 5000 | c1 | 58 | Nonionic | C | 9 | - | 0 | C | 11 | C | 8 | |
| | 40 | 58 | 300 | 500 | b1 | 4 | - | - | 0 | Nonionic | C | 9 | - | 0 | C | 11 | C | 8 | |
| | 41 | 0 | 300 | 500 | b1 | 4 | 2000 | c2 | 58 | Nonionic | C | 9 | - | 0 | C | 11 | C | 8 | |
| | 42 | 0 | 300 | 500 | b1 | 4 | 2000 | c3 | 58 | Nonionic | C | 9 | - | 0 | C | 11 | C | 8 | |
| | 43 | 0 | 300 | 500 | b1 | 4 | 2000 | c1 | 58 | Amine | C | 9 | - | 0 | C | 11 | C | 8 | |
| | 44 | 0 | 300 | 500 | b1 | 4 | 2000 | c1 | 58 | Nonionic | C | 9 | - | 0 | C | 11 | C | 8 | |
| | 45 | 0 | 300 | 500 | b1 | 4 | 2000 | c1 | 58 | Nonionic | C | 9 | - | 0 | C | 11 | C | 8 | |
| | 46 | 0 | 300 | 500 | b1 | 4 | 2000 | c1 | 58 | Nonionic | A | 9 | - | 0 | C | 11 | C | 8 | |
| | 47 | 0 | 300 | 500 | b1 | 4 | 2000 | c1 | 58 | Nonionic | B | 9 | - | 0 | C | 11 | C | 8 | |
| | 48 | 0 | 300 | 500 | b1 | 4 | 2000 | c1 | 58 | Nonionic | D | 9 | - | 0 | C | 11 | C | 8 | |

Table 15

| | | Organic coating | | | | | | | | | | | | | | | | | | Temp. after 20 sec in furnace °C |
|---|---|---|---|---|---|---|---|---|---|---|---|---|---|---|---|---|---|---|---|---|
| | | Bis-phenol epoxy resin (a) | Phosphorylated epoxy resin (b) | | | | Epoxy resin having primary hydroxyl group (C) | | | Emulsi-fier | Glycoluril resin | | Amino resin | | Urethane resin | | Water repellent | | | |
| | | Part by mass | Epoxy equi-val-ent | P-OH equi-val-ent | Type of resin b | Part by mass | Epoxy equi-valent | Type of resin c | Part by mass | | Type | Part by mass | Type | Part by mass | Type | Part by mass | Type | Part by mass | | |
| EXAMPLE | 26 | 0 | 300 | 500 | b1 | 4 | 2000 | c1 | 58 | Nonionic | C | 9 | - | 0 | C | 11 | C | 8 | | 180 |
| | 27 | 0 | 300 | 500 | b1 | 4 | 2000 | c1 | 58 | Nonionic | C | 9 | - | 0 | C | 11 | C | 8 | | |
| | 28 | 0 | 300 | 500 | b1 | 4 | 2000 | c1 | 58 | Nonionic | C | 9 | - | 0 | C | 11 | C | 8 | | |
| | 29 | 0 | 300 | 500 | b2 | 4 | 2000 | c1 | 58 | Nonionic | C | 9 | - | 0 | C | 11 | C | 8 | | |
| | 30 | 0 | 300 | 500 | b3 | 4 | 2000 | c1 | 58 | Nonionic | C | 9 | - | 0 | C | 11 | C | 8 | | |
| | 31 | 0 | 300 | 500 | b1 | 4 | 500 | c1 | 58 | Nonionic | C | 9 | - | 0 | C | 11 | C | 8 | | |
| | 32 | 0 | 300 | 500 | b1 | 4 | 5000 | c1 | 58 | Nonionic | C | 9 | - | 0 | C | 11 | C | 8 | | |
| | 33 | 0 | 500 | 500 | b1 | 4 | 2000 | c1 | 58 | Nonionic | C | 9 | - | 0 | C | 11 | C | 8 | | |
| | 34 | 0 | 850 | 150 | b1 | 4 | 2000 | c1 | 58 | Nonionic | C | 9 | - | 0 | C | 11 | C | 8 | | |
| | 35 | 0 | 150 | 850 | b1 | 4 | 2000 | c1 | 58 | Nonionic | C | 9 | - | 0 | C | 11 | C | 8 | | |
| | 36 | 0 | 300 | 500 | b2 | 4 | 2000 | c1 | 58 | Nonionic | C | 9 | - | 0 | C | 11 | C | 8 | | |
| | 37 | 0 | 300 | 500 | b3 | 4 | 2000 | c1 | 58 | Nonionic | C | 9 | - | 0 | C | 11 | C | 8 | | |
| | 38 | 0 | 300 | 500 | b1 | 4 | 500 | c1 | 58 | Nonionic | C | 9 | - | 0 | C | 11 | C | 8 | | |
| | 39 | 0 | 300 | 500 | b1 | 4 | 5000 | c1 | 58 | Nonionic | C | 9 | - | 0 | C | 11 | C | 8 | | |
| | 40 | 58 | 300 | 500 | b1 | 4 | - | - | 0 | Nonionic | C | 9 | - | 0 | C | 11 | C | 8 | | |
| | 41 | 0 | 300 | 500 | b1 | 4 | 2000 | c2 | 58 | Nonionic | C | 9 | - | 0 | C | 11 | C | 8 | | |
| | 42 | 0 | 300 | 500 | b1 | 4 | 2000 | c3 | 58 | Nonionic | C | 9 | - | 0 | C | 11 | C | 8 | | |
| | 43 | 0 | 300 | 500 | b1 | 4 | 2000 | c1 | 58 | Amine | C | 9 | - | 0 | C | 11 | C | 8 | | |
| | 44 | 0 | 300 | 500 | b1 | 4 | 2000 | c1 | 58 | Nonionic | C | 9 | - | 0 | C | 11 | C | 8 | | |
| | 45 | 0 | 300 | 500 | b1 | 4 | 2000 | c1 | 58 | Nonionic | C | 9 | - | 0 | C | 11 | C | 8 | | |
| | 46 | 0 | 300 | 500 | b1 | 4 | 2000 | c1 | 58 | Nonionic | A | 9 | - | 0 | C | 11 | C | 8 | | |
| | 47 | 0 | 300 | 500 | b1 | 4 | 2000 | c1 | 58 | Nonionic | B | 9 | - | 0 | C | 11 | C | 8 | | |
| | 48 | 0 | 300 | 500 | b1 | 4 | 2000 | c1 | 58 | Nonionic | D | 9 | - | 0 | C | 11 | C | 8 | | |

Table 16

| | | Metal sheet | Intermediate layer | | | | | | | | | | | | Organic coating | |
|---|---|---|---|---|---|---|---|---|---|---|---|---|---|---|---|---|
| | | | Metal compound | | | | | | | | | | Resin | Film thick-ness | Metal | Film thick-ness |
| | | | Mg compound | | Mn compound | | Al compound | | Zn compound | | Other compound | | | | | |
| | | | Type | Part by mass | Type | Part by mass | Type | Part by mass | Type | Part by mass | Type | Part by mass | Part by mass | nm | | µm |
| EXAMPLE | 26 | A | Mg-P | 2.5 | Mn-P | 2.5 | Al-P | 2.5 | Zn-P | 2.5 | - | 0 | 90 | 200 | Mg,Mn,Al,Zn | 1.5 |
| | 27 | A | Mg-P | 2.5 | Mn-P | 2.5 | Al-P | 2.5 | Zn-P | 2.5 | - | 0 | 90 | 500 | Mg,Mn,Al,Zn | 1.5 |
| | 28 | A | Mg-P | 2.5 | Mn-P | 2.5 | Al-P | 2.5 | Zn-P | 2.5 | - | 0 | 90 | 1000 | Mg,Mn,Al,Zn | 1.5 |
| | 29 | A | Mg-P | 5 | Mn-P | 3 | Al-P | 2 | - | 0 | - | 0 | 90 | 150 | Mg,Mn,Al | 0.3 |
| | 30 | A | Mg-P | 5 | Mn-P | 3 | Al-P | 2 | - | 0 | - | 0 | 90 | 150 | Mg,Mn,Al | 0.5 |
| | 31 | A | Mg-P | 5 | Mn-P | 3 | Al-P | 2 | - | 0 | - | 0 | 90 | 150 | Mg,Mn,Al | 3 |
| | 32 | A | Mg-P | 5 | Mn-P | 3 | Al-P | 2 | - | 0 | - | 0 | 90 | 150 | Mg,Mn,Al | 5 |
| | 33 | A | Mg-P | 5 | Mn-P | 3 | Al-P | 2 | - | 0 | - | 0 | 90 | 150 | Mg,Mn,Al | 1.5 |
| | 34 | A | Mg-P | 5 | Mn-P | 3 | Al-P | 2 | - | 0 | - | 0 | 90 | 150 | Mg,Mn,Al | 1.5 |
| | 35 | A | Mg-P | 5 | Mn-P | 3 | Al-P | 2 | - | 0 | - | 0 | 90 | 150 | Mg,Mn,Al | 1.5 |
| | 36 | A | Mg-P | 5 | Mn-P | 3 | Al-P | 2 | - | 0 | - | 0 | 90 | 150 | Mg,Mn,Al | 1.5 |
| | 37 | A | Mg-P | 5 | Mn-P | 3 | Al-P | 2 | - | 0 | - | 0 | 90 | 150 | Mg,Mn,Al | 1.5 |
| | 38 | A | Mg-P | 5 | Mn-P | 3 | Al-P | 2 | - | 0 | - | 0 | 90 | 150 | Mg,Mn,Al | 1.5 |
| | 39 | A | Mg-P | 5 | Mn-P | 3 | Al-P | 2 | - | 0 | - | 0 | 90 | 150 | Mg,Mn,Al | 1.5 |
| | 40 | A | Mg-P | 5 | Mn-P | 3 | Al-P | 2 | - | 0 | - | 0 | 90 | 150 | Mg,Mn,Al | 1.5 |
| | 41 | A | Mg-P | 5 | Mn-P | 3 | Al-P | 2 | - | 0 | - | 0 | 90 | 150 | Mg,Mn,Al | 1.5 |
| | 42 | A | Mg-P | 5 | Mn-P | 3 | Al-P | 2 | - | 0 | - | 0 | 90 | 150 | Mg,Mn,Al | 1.5 |
| | 43 | A | Mg-P | 5 | Mn-P | 3 | Al-P | 2 | - | 0 | - | 0 | 90 | 150 | Mg,Mn,Al | 1.5 |
| | 44 | A | Mg-P | 5 | Mn-P | 3 | Al-P | 2 | - | 0 | - | 0 | 90 | 150 | Mg,Mn,Al | 1.5 |
| | 45 | A | Mg-P | 5 | Mn-P | 3 | Al-P | 2 | - | 0 | - | 0 | 90 | 150 | Mg,Mn,Al | 1.5 |
| | 46 | A | Mg-P | 5 | Mn-P | 3 | Al-P | 2 | - | 0 | - | 0 | 90 | 150 | Mg,Mn,Al | 1.5 |
| | 47 | A | Mg-P | 5 | Mn-P | 3 | Al-P | 2 | - | 0 | - | 0 | 90 | 150 | Mg,Mn,Sn | 1.5 |
| | 48 | A | Mg-P | 5 | Mn-P | 3 | Al-P | 2 | - | 0 | - | 0 | 90 | 150 | Mg,Mn,Al | 1.5 |

Table 17

| | | Organic coating | | | | | | | | | | | | | | | | | | Temp. after 20 sec in furnace °C |
|---|---|---|---|---|---|---|---|---|---|---|---|---|---|---|---|---|---|---|---|---|
| | | Bis-phenol epoxy resin (a) | Phosphorylated epoxy resin (b) | | | | Epoxy resin having primary hydroxyl group (C) | | | Emulsi-fier | Glycoluril resin | | Amino resin | | Urethane resin | | Water repellent | | |
| | | Part by mass | Epoxy equi-val-ent | P-OH equi-val-ent | Type of resin b | Part by mass | Epoxy equi-valent | Type of resin c | Part by mass | | Type | Part by mass | Type | Part by mass | Type | Part by mass | Type | Part by mass | |
| EXAMPLE | 49 | 0 | 300 | 500 | b1 | 4 | 2000 | c1 | 58 | Nonionic | C | 9 | G | 5 | C | 6 | C | 8 | 180 |
| | 50 | 0 | 300 | 500 | b1 | 4 | 2000 | c1 | 58 | Nonionic | C | 9 | H | 5 | C | 6 | C | 8 | |
| | 51 | 0 | 300 | 500 | b1 | 4 | 2000 | c1 | 58 | Nonionic | C | 9 | - | 0 | A | 6 | C | 8 | |
| | 52 | 0 | 300 | 500 | b1 | 4 | 2000 | c1 | 58 | Nonionic | C | 9 | - | 0 | B | 6 | C | 8 | |
| | 53 | 0 | 300 | 500 | b1 | 4 | 2000 | c1 | 58 | Nonionic | C | 9 | - | 0 | D | 6 | C | 8 | |
| | 54 | 0 | 300 | 500 | b1 | 4 | 2000 | c1 | 58 | Nonionic | C | 9 | - | 0 | C | 6 | C | 8 | |
| | 55 | 0 | 300 | 500 | b2 | 4 | 2000 | c1 | 58 | Nonionic | C | 9 | - | 0 | C | 6 | C | 8 | |
| | 56 | 0 | 300 | 500 | b3 | 4 | 2000 | c1 | 58 | Nonionic | C | 9 | - | 0 | C | 11 | C | 8 | |
| | 57 | 0 | 300 | 500 | b1 | 4 | 2000 | c1 | 58 | Nonionic | C | 9 | - | 0 | C | 11 | C | 8 | |
| | 58 | 0 | 300 | 500 | b1 | 4 | 2000 | c1 | 58 | Nonionic | C | 9 | - | 0 | C | 11 | A+D | 4+4 | |
| | 59 | 0 | 300 | 500 | b1 | 4 | 2000 | c1 | 58 | Nonionic | C | 9 | - | 0 | C | 11 | B+D | 4+4 | |
| | 60 | 0 | 300 | 500 | b1 | 9 | 2000 | c1 | 63 | Nonionic | C | 10 | - | 0 | - | 0 | C+D | 4+4 | |
| | 61 | 0 | 300 | 1300 | b1 | 4 | 2000 | c1 | 58 | Nonionic | C | 9 | - | 0 | C | 11 | C+D | 4+4 | |
| | 62 | 0 | 300 | 500 | b1 | 4 | 3000 | c1 | 58 | Nonionic | C | 9 | - | 0 | C | 11 | C+D | 4+4 | |
| | 63 | 0 | 300 | 500 | b1 | 4 | 6000 | c1 | 58 | Nonionic | C | 9 | - | 0 | C | 11 | C+D | 4+4 | |
| | 64 | 0 | 300 | 500 | b1 | 4 | 2000 | c1 | 58 | Nonionic | C | 9 | - | 0 | C | 11 | C+D | 4+4 | |
| | 65 | 0 | 300 | 500 | b1 | 4 | 2000 | c1 | 58 | Nonionic | C | 9 | - | 0 | C | 11 | C | 8 | |
| | 66 | 0 | 300 | 500 | b1 | 4 | 2000 | c1 | 58 | Nonionic | C | 9 | - | 0 | C | 11 | C | 8 | |
| | 67 | 0 | 300 | 500 | b1 | 4 | 2000 | c1 | 58 | Nonionic | C | 9 | - | 0 | C | 11 | C | 8 | |
| | 68 | 0 | 300 | 500 | b1 | 4 | 2000 | c1 | 58 | Nonionic | C | 9 | - | 0 | C | 11 | C | 8 | |
| | 69 | 0 | 300 | 500 | b1 | 4 | 2000 | c1 | 58 | Nonionic | C | 9 | - | 0 | C | 11 | C | 8 | |
| | 70 | 0 | 300 | 500 | b1 | 4 | 2000 | c1 | 58 | Nonionic | C | 9 | - | 0 | C | 11 | C | 8 | |
| | 71 | 0 | 300 | 500 | b1 | 4 | 2000 | c1 | 58 | Nonionic | C | 9 | - | 0 | C | 11 | C | 8 | |
| | 72 | 0 | 300 | 500 | b1 | 4 | 2000 | c1 | 58 | Nonionic | C | 9 | - | 0 | C | 11 | C | 8 | |

Table 18

| | | | Intermediate layer | | | | | | | | | | | | Organic coating | |
|---|---|---|---|---|---|---|---|---|---|---|---|---|---|---|---|---|
| | | | Metal compound | | | | | | | | | | Resin | Film thickness | Metal | Film thickness |
| | | | Mg compound | | Mn compound | | Al compound | | Zn compound | | Other compound | | Part by mass | nm | | µm |
| | | | Type | Part by mass | Type | Part by mass | Type | Part by mass | Type | Part by mass | Type | Part by mass | | | | |
| EXAMPLE | 49 | A | Mg-P | 5 | Mn-P | 3 | Al-P | 2 | - | 0 | - | 0 | 90 | 30 | Mg,Mn,Al | 1.5 |
| | 50 | A | Mg-P | 5 | Mn-P | 3 | Al-P | 2 | - | 0 | - | 0 | 90 | 50 | Mg,Mn,Al | 1.5 |
| | 51 | A | Mg-P | 5 | Mn-P | 3 | Al-P | 2 | - | 0 | - | 0 | 90 | 100 | Mg,Mn,Al | 1.5 |
| | 52 | A | Mg-P | 5 | Mn-P | 3 | Al-P | 2 | - | 0 | - | 0 | 90 | 200 | Mg,Mn,Al | 1.5 |
| | 53 | A | Mg-P | 5 | Mn-P | 3 | Al-P | 2 | - | 0 | - | 0 | 90 | 500 | Mg,Mn,Al | 1.5 |
| | 54 | A | Mg-P | 5 | Mn-P | 3 | Al-P | 2 | - | 0 | - | 0 | 90 | 1000 | Mg,Mn,Al | 1.5 |
| | 55 | A | Mg-P | 5 | Mn-P | 3 | Al-P | 2 | - | 0 | - | 0 | 90 | 150 | Mg,Mn,Al | 1.5 |
| | 56 | A | Mg-P | 5 | Mn-P | 3 | Al-P | 2 | - | 0 | - | 0 | 90 | 150 | Mg,Mn,Al | 1.5 |
| | 57 | A | Mg-P | 5 | Mn-P | 3 | Al-P | 2 | - | 0 | - | 0 | 90 | 150 | Mg,Mn,Al | 1.5 |
| | 58 | A | Mg-P | 5 | Mn-P | 3 | Al-P | 2 | - | 0 | - | 0 | 90 | 150 | Mg,Mn,Al | 1.5 |
| | 59 | A | Mg-P | 5 | Mn-P | 3 | Al-P | 2 | - | 0 | - | 0 | 90 | 150 | Mg,Mn,Al | 1.5 |
| | 60 | A | Mg-P | 5 | Mn-P | 3 | Al-P | 2 | - | 0 | - | 0 | 90 | 150 | Mg,Mn,Al | 1.5 |
| | 61 | A | Mg-P | 5 | Mn-P | 3 | Al-P | 2 | - | 0 | - | 0 | 90 | 150 | Mg,Mn,Al | 1.5 |
| | 62 | A | Mg-P | 5 | Mn-P | 3 | Al-P | 2 | - | 0 | - | 0 | 90 | 150 | Mg,Mn,Al | 1.5 |
| | 63 | A | Mg-P | 5 | Mn-P | 3 | Al-P | 2 | - | 0 | - | 0 | 90 | 150 | Mg,Mn,Al | 1.5 |

| | | | | | | | | | | | | | | | | |
|---|---|---|---|---|---|---|---|---|---|---|---|---|---|---|---|---|
| | 64 | A | Mg-P | 5 | Mn-P | 3 | Al-P | 2 | - | 0 | - | 0 | 90 | 150 | Mg,Mn,Al | 1.5 |
| | 65 | G | - | 0 | - | 0 | - | 0 | - | 0 | Co-A | 10 | 90 | 150 | Co | 1.5 |
| | 66 | H | - | 0 | - | 0 | Al-A | 10 | - | 0 | - | 0 | 90 | 150 | Al | 1.5 |
| | 67 | I | - | 0 | - | 0 | Al-A | 10 | - | 0 | - | 0 | 90 | 150 | Al | 1.5 |
| | 68 | J | - | 0 | - | 0 | Al-A | 10 | - | 0 | - | 0 | 90 | 150 | Al | 1.5 |
| | 69 | K | Mg-A | 10 | - | 0 | - | 0 | - | 0 | - | 0 | 90 | 150 | Mg | 1.5 |
| | 70 | L | Mg-A | 10 | - | 0 | - | 0 | - | 0 | - | 0 | 90 | 150 | Mg | 1.5 |
| | 71 | M | Mg-A | 10 | - | 0 | - | 0 | - | 0 | - | 0 | 90 | 150 | Mg | 1.5 |
| | 72 | N | Mg-A | 10 | Mn-A | 10 | - | 0 | - | 0 | - | 0 | 90 | 150 | Mn | 1.5 |

Table 19

| | | Organic coating | | | | | | | | | | | | | | | | | Temp. after 20 sec in furnace °C |
|---|---|---|---|---|---|---|---|---|---|---|---|---|---|---|---|---|---|---|---|
| | | Bis-phenol epoxy resin (a) | Phosphorylated epoxy resin (b) | | | | Epoxy resin having primary hydroxyl group (C) | | | Emulsi-fier) | Glycoluril resin | | Amino resin | | Urethane resin | | Water repellent | | |
| | | Part by mass | Epoxy equi-val-ent | P-OH equi-val-ent | Type of resin b | Part by mass | Epoxy equi-valent | Type of resin c | Part by mass | | Type | Part by mass | Type | Part by mass | Type | Part by mass | Type | Part by mass | |
| Ex. | 73 | 0 | 300 | 500 | b1 | 4 | 2000 | c1 | 58 | Nonionic | C | 9 | - | 0 | C | 11 | C | 8 | 180 |
| | 74 | 0 | 300 | 500 | b1 | 4 | 2000 | c1 | 58 | Nonionic | C | 9 | - | 0 | C | 11 | C | 8 | |
| | 75 | 0 | 300 | 500 | b1 | 4 | 2000 | c1 | 58 | Nonionic | C | 9 | - | 0 | C | 11 | C | 8 | |
| Comp. Ex. | 1 | 0 | 300 | 500 | b1 | 4 | 2000 | c1 | 58 | Nonionic | C | 9 | - | 0 | C | 11 | C+D | 4+4 | |
| | 2 | 0 | - | - | - | 0 | - | - | 0 | - | - | 0 | - | 0 | - | 0 | - | 0 | |
| | 3 | 0 | 300 | 500 | b1 | 4 | 2000 | c1 | 58 | Nonionic | - | 0 | E | 9 | C | 11 | C | 8 | |
| | 4 | 0 | 300 | 500 | b1 | 4 | 2000 | c1 | 58 | Nonionic | - | 0 | F | 9 | C | 11 | C | 8 | |
| | 5 | 0 | 300 | 500 | b1 | 4 | 2000 | c1 | 58 | Nonionic | - | 0 | G | 9 | C | 11 | C | 8 | |
| | 6 | 0 | 300 | 500 | b1 | 4 | 2000 | c1 | 58 | Nonionic | - | 0 | H | 9 | C | 11 | C | 8 | |

Table 20

| | | Metal sheet | Intermediate layer | | | | | | | | | | | | Organic coating | |
|---|---|---|---|---|---|---|---|---|---|---|---|---|---|---|---|---|
| | | | Metal compound | | | | | | | | | | Resin | Film thick-ness | Metal | Film thick-ness |
| | | | Mg compound | | Mn compound | | Al compound | | Zn compound | | Other compound | | Part by mass | nm | | µm |
| | | | Type | Part by mass | Type | Part by mass | Type | Part by mass | Type | Part by mass | Type | Part by mass | | | | |
| Ex. | 73 | A | Mg-P | 2.5 | Mn-C | 2.5 | Al-P | 0.5 | Zn-C | 2.5 | Na-V | 2.0 | 90 | 150 | Mg,Mn,Al,Na | 1.5 |
| | 74 | A | Mg-P | 2.5 | Mn-C | 2.5 | Al-P | 0.5 | Zn-C | 2.5 | Na-Mo | 2.0 | 90 | 150 | Mg,Mn,Al,Na | 1.5 |
| | 75 | A | Mg-P | 2.5 | Mn-C | 2.5 | Al-P | 0.5 | Zn-C | 2.5 | K-B | 2.0 | 90 | 150 | Mg,Mn,Al,K | 1.5 |
| Comp. Ex. | 1 | A | - | 0 | - | 0 | - | 0 | - | 0 | - | 0 | 0 | 0 | - | 1.5 |
| | 2 | A | Mg-P | 50 | Mn-P | 30 | Al-P | 20 | - | 0 | - | 0 | 0 | 150 | Mg,Mn,Al | 1.5 |
| | 3 | A | Mg-P | 5 | Mn-P | 3 | Al-P | 2 | - | 0 | - | 0 | 90 | 150 | Mg,Mn,Al | 1.5 |
| | 4 | A | Mg-P | 5 | Mn-P | 3 | Al-P | 2 | - | 0 | - | 0 | 90 | 150 | Mg,Mn,Al | 1.5 |
| | 5 | A | Mg-P | 5 | Mn-P | 3 | Al-P | 2 | - | 0 | - | 0 | 90 | 150 | Mg,Mn,Al | 1.5 |
| | 6 | A | Mg-P | 5 | Mn-P | 3 | Al-P | 2 | - | 0 | - | 0 | 90 | 150 | Mg,Mn,Al | 1.5 |

Table 21

| | | SST/ corrosion resistance of flat area | SST/ adhesion of crosscut area | CCT/ corrosion resistance of formed area | Conductivity after corrosion test | Adhesion to the overlying layer | Fingerprint resistance |
|---|---|---|---|---|---|---|---|
| EXAMPLE | 1 | ◎ | ◎ | ◎ | ○ | ◎ | ◎ |
| | 2 | ◎ | ◎ | ◎ | ○ | ◎ | ◎ |
| | 3 | ◎ | ◎ | ◎ | ○ | ◎ | ◎ |
| | 4 | ◎ | ◎ | ◎ | ○ | ◎ | ◎ |
| | 5 | ◎ | ◎ | ◎ | ○ | ◎ | ◎ |
| | 6 | ◎ | ◎ | ◎ | ○ | ◎ | ◎ |
| | 7 | ◎ | ◎ | ◎ | ○ | ◎ | ◎ |
| | 8 | ◎ | ◎ | ◎ | ○ | ◎ | ◎ |
| | 9 | ◎ | ◎ | ◎ | ○ | ◎ | ◎ |
| | 10 | ◎ | ◎ | ◎ | ○ | ◎ | ◎ |
| | 11 | ◎ | ◎ | ◎ | ○ | ◎ | ◎ |
| | 12 | ◎ | ◎ | ◎ | ○ | ◎ | ◎ |
| | 13 | ◎ | ◎ | ◎ | ○ | ◎ | ◎ |
| | 14 | ◎ | ◎ | ◎ | ○ | ◎ | ◎ |
| | 15 | ◎ | ◎ | ◎ | ○ | ◎ | ◎ |
| | 16 | ◎ | ◎ | ◎ | ○ | ◎ | ◎ |
| | 17 | ◎ | ◎ | ◎ | ○ | ◎ | ◎ |
| | 18 | ◎ | ◎ | ◎ | ○ | ◎ | ◎ |
| | 19 | ◎ | ◎ | ◎ | ○ | ◎ | ◎ |
| | 20 | ◎ | ◎ | ◎ | ○ | ◎ | ◎ |
| | 21 | ◎ | ◎ | ◎ | ○ | ◎ | ◎ |
| | 22 | ◎ | ◎ | ◎ | ○ | ◎ | ◎ |
| | 23 | ◎ | ◎ | ◎ | ○ | ◎ | ◎ |
| | 24 | ◎ | ◎ | ◎ | ○ | ◎ | ◎ |
| | 25 | ◎ | ◎ | ◎ | ○ | ◎ | ◎ |

Table 22

| | | SST/ corrosion resistance of flat area | SST/ adhesion of crosscut area | CCT/ corrosion resistance of formed area | Conductivity after corrosion test | Adhesion to the overlying layer | Fingerprint resistance |
|---|---|---|---|---|---|---|---|
| EXAMPLE | 26 | ◎ | ◎ | ◎ | ○ | ◎ | ◎ |
| | 27 | ◎ | ◎ | ◎ | ○ | ◎ | ◎ |
| | 28 | ◎ | ◎ | ◎ | ○ | ◎ | ◎ |
| | 29 | Δ | Δ | Δ | ○ | ◎ | ◎ |
| | 30 | Δ | Δ | Δ | ○ | ◎ | ◎ |
| | 31 | ◎ | ◎ | ◎ | ○ | ◎ | ◎ |
| | 32 | ◎ | ◎ | ◎ | Δ | ◎ | ◎ |
| | 33 | ○ | ○ | ○ | ○ | ◎ | ◎ |
| | 34 | ○ | ○ | ○ | ○ | ◎ | ◎ |
| | 35 | ○ | ○ | ○ | ○ | ◎ | ◎ |
| | 36 | ○ | ○ | ○ | ○ | ◎ | ◎ |
| | 37 | ○ | ○ | ○ | ○ | ◎ | ◎ |
| | 38 | ○ | ○ | ○ | ○ | ◎ | ◎ |
| | 39 | ○ | ○ | ○ | ○ | ◎ | ◎ |
| | 40 | ○ | ○ | Δ | ○ | ◎ | ◎ |
| | 41 | ○ | ○ | ○ | ○ | ◎ | ◎ |
| | 42 | ○ | ○ | ○ | ○ | ◎ | ◎ |
| | 43 | ○ | ○ | ○ | Δ | ◎ | ◎ |
| | 44 | ○ | ○ | ○ | ○ | ◎ | ◎ |
| | 45 | ○ | ○ | ○ | Δ | ◎ | ◎ |
| | 46 | ○ | ○ | ○ | ○ | ◎ | ◎ |
| | 47 | ○ | ○ | ○ | ○ | ◎ | ◎ |
| | 48 | ○ | ○ | ○ | ○ | ◎ | ◎ |

Table 23

| | | SST/ corrosion resistance of flat area | SST/ adhesion of crosscut area | CCT/ corrosion resistance of formed area | Conductivity after corrosion test | Adhesion to the overlying layer | Fingerprint resistance |
|---|---|---|---|---|---|---|---|
| EXAMPLE | 49 | ○ | ○ | ○ | ○ | ◎ | ○ |
| | 50 | ○ | ○ | ○ | ○ | ◎ | ◎ |
| | 51 | ○ | ○ | ○ | ○ | ◎ | ◎ |
| | 52 | ○ | ○ | ○ | ○ | ◎ | ◎ |
| | 53 | ○ | ○ | ○ | ○ | ◎ | ◎ |
| | 54 | ○ | ○ | ○ | ○ | ◎ | ◎ |
| | 55 | ○ | ○ | ○ | ○ | ◎ | ◎ |
| | 56 | ○ | ○ | ○ | ○ | ◎ | ◎ |
| | 57 | ○ | ○ | ○ | ○ | ◎ | ◎ |
| | 58 | ○ | ○ | ○ | ○ | ◎ | ◎ |
| | 59 | ○ | ○ | ○ | ○ | ◎ | ◎ |
| | 60 | ○ | ○ | Δ | ○ | ◎ | ◎ |
| | 61 | ○ | ○ | ○ | ○ | ◎ | ◎ |
| | 62 | ○ | ○ | ○ | ○ | ◎ | ◎ |
| | 63 | ○ | ○ | ○ | ○ | ◎ | ◎ |
| | 64 | ○ | ○ | ○ | ○ | ◎ | ◎ |
| | 65 | Δ | Δ | Δ | Δ | ◎ | ◎ |
| | 66 | ◎ | ◎ | ○ | ○ | ◎ | ◎ |
| | 67 | ◎ | ◎ | ○ | ○ | ◎ | ◎ |
| | 68 | ○ | ○ | Δ | Δ | ◎ | ◎ |
| | 69 | ◎ | ◎ | ○ | Δ | ◎ | ◎ |
| | 70 | ◎ | ◎ | ○ | Δ | ◎ | ◎ |
| | 71 | ○ | ◎ | Δ | Δ | ◎ | ◎ |
| | 72 | ○ | ○ | Δ | Δ | ◎ | ◎ |

Table 24

| | | SST/ corrosion resistance of flat area | SST/ adhesion of crosscut area | CCT/ corrosion resistance of formed area | Conductivity after corrosion test | Adhesion to the overlying layer | Fingerprint resistance |
|---|---|---|---|---|---|---|---|
| Ex. | 73 | ◎ | ◎ | ◎ | ○ | ◎ | ◎ |
| | 74 | ◎ | ◎ | ◎ | ○ | ◎ | ◎ |
| | 75 | ◎ | ◎ | ◎ | ○ | ◎ | ◎ |

Table 24 (continued)

| | | SST/ corrosion resistance of flat area | SST/ adhesion of crosscut area | CCT/ corrosion resistance of formed area | Conductivity after corrosion test | Adhesion to the overlying layer | Fingerprint resistance |
|---|---|---|---|---|---|---|---|
| Comp. Ex. | 1 | × | × | × | ○ | ◎ | ◎ |
| | 2 | × | × | × | ○ | ◎ | ◎ |
| | 3 | × | × | × | ○ | Δ | ◎ |
| | 4 | × | × | × | ○ | Δ | ◎ |
| | 5 | × | × | × | ○ | Δ | ◎ |
| | 6 | × | × | × | ○ | Δ | ◎ |

INDUSTRIAL APPLICABILITY

The surface treated metal sheet of the present invention is a so-called chromate-free surface treated metal sheet which does not contain chromium. The surface treated metal sheet of the invention is provided with outstanding corrosion resistance and wet adhesion, and also with excellent electroconductivity, and therefore, it can be used as a substitute for the conventional chromate treated steel sheets used in the fields of automobiles, home appliance, and construction materials. Since the surface treated metal sheet of the present invention is free from chromium, it can be used in a wide variety of applications ranging from containers and tableware to interior construction materials. The surface treating agent of the present invention is highly useful in producing such chromate-free surface treated metal sheet.

## Claims

**1.** A surface treated metal sheet having an organic coating comprising an epoxy resin, a glycoluril resin, and a metal compound (excluding a chromium compound) on at least one surface of the metal sheet

**2.** A surface treated metal sheet having an intermediate layer comprising a metal (excluding chromium) on at least one surface of the metal sheet, and an organic coating comprising an epoxy resin and a glycoluril resin on the intermediate layer.

**3.** A surface treated metal sheet according to claim 2 having an intermediate layer comprising a metal (excluding chromium) on at least one surface of the metal sheet, and an organic coating comprising an epoxy resin, a glycoluril resin, and a metal compound (excluding a chromium compound) on the intermediate layer.

**4.** A surface treated metal sheet according to claim 1 or 2 wherein said epoxy resin is at least one member selected from the group consisting of a bisphenol epoxy resin, a phosphorylated epoxy resin, and a modified epoxy resin having primary hydroxyl group.

**5.** A surface treated metal sheet according to claim 1 or 2 wherein said organic coating is an organic coating containing a bisphenol epoxy resin, a phosphorylated epoxy resin, a glycoluril resin, and a metal compound.

**6.** A surface treated metal sheet according to claim 1 or 2 wherein said organic coating is an organic coating containing a bisphenol epoxy resin, a modified epoxy resin having primary hydroxyl group, a glycoluril resin, and a metal compound.

**7.** A surface treated metal sheet according to claim 1 or 2 wherein said organic coating is an organic coating containing a phosphorylated epoxy resin, a modified epoxy resin having primary hydroxyl group, a glycoluril resin, and a metal compound.

**8.** A surface treated metal sheet according to claim 1 or 2 wherein said organic coating is an organic coating containing

a bisphenol epoxy resin, a phosphorylated epoxy resin, a modified epoxy resin having primary hydroxyl group, a glycoluril resin, and a metal compound.

**9.** A surface treated metal sheet according to claim 1 or 2 wherein said metal compound contains at least one metal selected from the group consisting of Mg, Mn and Al, and said metal compound comprises at least one metal compound selected from a phosphate, a carbonate, a nitrate, an acetate, a hydroxide, a fluoride, an oxo acid salt, and a borate.

**10.** A surface treated metal sheet according to claim 9 wherein said metal compound further comprises a metal compound wherein the metal is at least one member selected from the group consisting of Zn, Co, Ti, Sn, Ni, Fe, Zr, Sr, Y, Cu, Ca, W, Mo, V, Ba, Na, and K, and said metal compound comprises at least one member selected from a phosphate, a carbonate, a nitrate, an acetate, a hydroxide, a fluoride, an oxo acid salt, a borate, vanadate, and molybdate.

**11.** A surface treated metal sheet according to claim 2 wherein said metal is at least one metal selected from the group consisting of Cu, Co, Fe, Mn, Sn, V, Mo, Mg, Ba, Al, W, Ca, Sr,Zr, Nb, Y, Ti, Ni, Na, K, and Zn.

**12.** A surface treated metal sheet according to claim 1 or 2 wherein said organic coating further comprises a water repellent.

**13.** A surface treating agent comprising an epoxy resin, a glycoluril resin, and a metal compound (which is not a chromium compound).

**14.** A surface treating agent according to claim 13 wherein said epoxy resin comprises at least one member selected from the group consisting of a bisphenol epoxy resin, a phosphorylated epoxy resin, and a modified epoxy resin having primary hydroxyl group.

**15.** A surface treating agent according to claim 13 wherein said metal compound contains at least one metal selected from the group consisting of Mg, Mn and Al, and said metal compound comprises at least one metal compound selected from a phosphate, a carbonate, a nitrate, an acetate, a hydroxide, a fluoride, an oxo acid salt, and a borate.

**16.** A surface treating agent according to claim 13 wherein said metal compound further comprises a metal compound wherein the metal is at least one member selected from the group consisting of Zn, Co, Ti, Sn, Ni, Fe, Zr, Sr, Y, Cu, Ca, W, Mo, V, Ba, Na, and K, and said metal compound comprises at least one metal compound selected from a phosphate, a carbonate, a nitrate, an acetate, a hydroxide, a fluoride, an oxo acid salt, a borate, vanadate, and molybdate.

**17.** A surface treating agent according to claim 13 further comprising a water repellent.

**18.** A surface treating agent according to claim 13 wherein said surface treating agent is the one to be used on a metal plate.

FIG.1

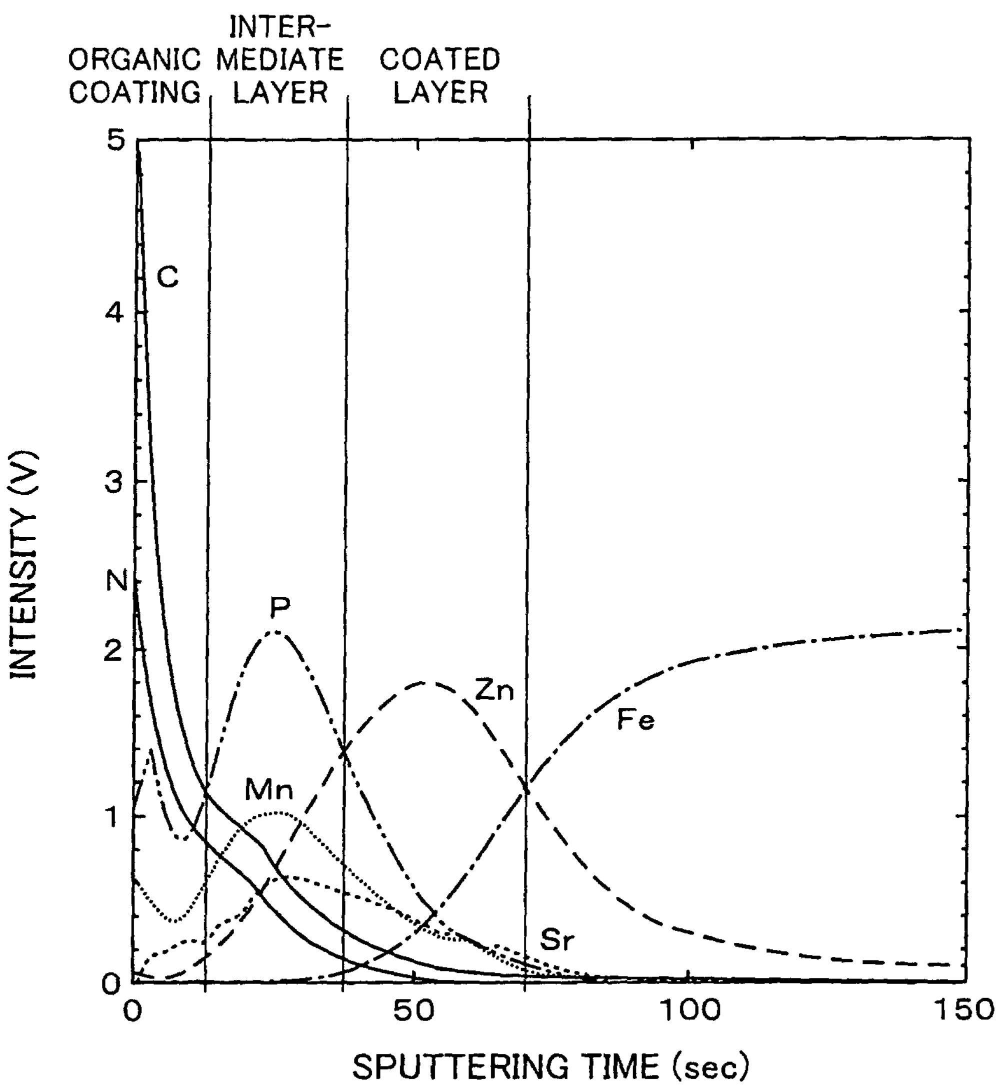
INTER-
ORGANIC MEDIATE COATED
COATING LAYER LAYER
C
N
P
Zn
Fe
Mn
Sr
INTENSITY (V)
0
1
2
3
4
5
0
50
100
150
SPUTTERING TIME (sec)

## INTERNATIONAL SEARCH REPORT

International application No.
PCT/JP02/11874

A. CLASSIFICATION OF SUBJECT MATTER
Int.Cl[7] C23C26/00

According to International Patent Classification (IPC) or to both national classification and IPC

B. FIELDS SEARCHED

Minimum documentation searched (classification system followed by classification symbols)
Int.Cl[7] C23C26/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,A | JP 2001-335955 A (NKK Corp.), 07 December, 2001 (07.12.01), (Family: none) | 1-18 |
| A | JP 2001-181574 A (Kansai Paint Co., Ltd.), 03 July, 2001 (03.07.01), (Family: none) | 1-18 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>14 February, 2003 (14.02.03) | Date of mailing of the international search report<br>04 March, 2003 (04.03.03) |
| Name and mailing address of the ISA/<br>Japanese Patent Office<br>Facsimile No. | Authorized officer<br><br>Telephone No. |

Form PCT/ISA/210 (second sheet) (July 1998)